(19) Europäisches Patentamt / European Patent Office / Office européen des brevets

(11) **EP 4 056 429 A1**

(12) **EUROPEAN PATENT APPLICATION**

(43) Date of publication:
**14.09.2022 Bulletin 2022/37**

(21) Application number: **22170461.2**

(22) Date of filing: **13.09.2018**

(51) International Patent Classification (IPC):
**B60R 13/02** (2006.01)    **B32B 17/10** (2006.01)

(52) Cooperative Patent Classification (CPC):
**B60R 13/0256; B32B 17/06; B32B 17/10018; B32B 17/10137; B32B 17/10889;** B32B 2457/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2017   US 201762558341 P**
**01.12.2017   US 201762593553 P**
**16.05.2018   US 201862672123 P**

(62) Document number(s) of the earlier application(s) in accordance with Art. 76 EPC:
**18783605.1 / 3 681 762**

(71) Applicant: **Corning Incorporated**
**Corning, New York 14831 (US)**

(72) Inventors:
 • **BLACK, Matthew Lee**
  **Naples, 14512 (US)**
 • **CLEARY, Thomas Michael**
  **Elmira, 14903 (US)**
 • **COLEMAN, Sean Patrick**
  **Lindley, 14858 (US)**

 • **FENTON, Hope Marie**
  **Elmira, 14905 (US)**
 • **KNICKERBOCKER, Ward Tyson**
  **Nelson, 16940 (US)**
 • **KUMAR, Atul**
  **Horseheads, 14845 (US)**
 • **MERHY, Elias**
  **91120 Palaiseau (FR)**
 • **MOU, Jinfa**
  **Painted Post, 14870 (US)**
 • **Yawei, SUN**
  **Elmira, 14903 (US)**
 • **ZHANG, Chunhe**
  **Hickory, 28601 (US)**

(74) Representative: **Epping - Hermann - Fischer Patentanwaltsgesellschaft mbH**
**Schloßschmidstraße 5**
**80639 München (DE)**

Remarks:
This application was filed on 28-04-2022 as a divisional application to the application mentioned under INID code 62.

(54) **VEHICLE INTERIOR SYSTEMS HAVING A CURVED COVER GLASS WITH IMPROVED IMPACT PERFORMANCE AND METHODS FOR FORMING THE SAME**

(57)    Embodiments of a vehicle interior system are disclosed. In one or more embodiments, the vehicle interior system includes a base having a curved surface, and a glass substrate. The glass substrate has a first major surface, a second major surface, a minor surface connecting the first and second major surfaces, and a thickness in a range from 0.05 mm to 2 mm. The second major surface has a first radius of curvature of 500 mm or greater. When an impacter having a mass of 6.8 kg impacts the first major surface at an impact velocity of 5.35 m/s to 6.69 m/s, the deceleration of the impacter is 120 g (g-force) or less.

FIGURE 15

EP 4 056 429 A1

**Description**

**CROSS-REFERENCE TO RELATED APPLICATIONS**

This application claims the benefit of priority under 35 U.S.C. § 119 of U.S. Provisional Application Serial No. 62/558,341 filed on September 13, 2017, U.S. Provisional Application Serial No. 62/593,553 filed on December 01, 2017, and U.S. Provisional Application Serial No. 62/672,123 filed on May 16, 2018, the contents of which are relied upon and incorporated herein by reference in their entirety.

**TECHNICAL FIELD**

The disclosure relates to vehicle interior systems including glass and methods for forming the same, and more particularly to vehicle interior systems including a cold-formed or cold-bent cover glass and having improved impact performance, and methods for forming the same.

**BACKGROUND**

Vehicle interiors include curved surfaces and can incorporate displays and/or touch panels in such curved surfaces. The materials used to form such curved surfaces are typically limited to polymers, which do not exhibit the durability and optical performance of glass. As such, curved glass substrates are desirable, especially when used as covers for displays and/or touch panel. Existing methods of forming such curved glass substrates, such as thermal forming, have drawbacks including high cost, optical distortion, and surface marking. In addition, driver and passenger safety is also a concern with existing glass displays when, for example, the glass is impacted with a force sufficient to break the glass, which may generate glass shards that can lacerate human skin. Accordingly, Applicant has identified a need for vehicle interior systems that can incorporate a curved glass substrate in a cost-effective manner and without problems typically associated with glass thermal forming processes, and while also having the mechanical performance to pass industry-standard safety tests and regulations .

**SUMMARY**

A first aspect of this disclosure pertains to a vehicle interior system. In one or more embodiments, the vehicle interior system includes a base having a curved surface, and a glass substrate disposed on the base. The glass substrate has a first major surface, a second major surface, and a minor surface connecting the first major surface and the second major surface. The glass substrate has a thickness in a range from 0.05 mm to 2 mm, and the second major surface includes a first radius of curvature of 500 mm or greater according to one or more embodiments. According to one or more embodiments of the vehicle interior system, when an impacter having a mass of 6.8 kg impacts the first major surface at an impact velocity of 5.35 m/s to 6.69 m/s, the deceleration of the impacter is 120 g (g-force) or less. The deceleration of the impacter is not greater than 80 g for any 3 ms interval over a time of the impact. A maximum thickness of the glass substrate measured between the first and second major surfaces is less than or equal to 1.5 mm in one or more embodiments, and is 0.3 mm to 0.7 mm in some embodiments. The glass substrate is a chemically-strengthened glass in one or more embodiments, and at least one of an anti-glare coating, an anti-reflection coating, and an easy-to-clean coating disposed on the first major surface of the glass substrate. In one or more embodiments, the vehicle interior system includes a display disposed on the curved surface, and the display includes a display module attached to the second major surface of the glass substrate. The vehicle interior system includes an adhesive bonding the glass substrate to the base. In some embodiments, the glass substrate includes at least one edge region that is strengthened for improved edge impact performance.

Another aspect of this disclosure pertains to methods of making a vehicle interior system. In one or more embodiments, the method includes curving the glass substrate at a temperature below the glass transition temperature of the glass substrate. In other embodiments, the method includes curving the glass substrate at a temperature above the glass transition temperature of the glass substrate. The method of some embodiments further includes curving the substrate with the glass substrate.

Other aspects of this disclosure pertain to a vehicle interior system including a base and a glass substrate and a method of design such a vehicle interior system. According to one or more embodiments, the vehicle interior system is designed such that, in the cold-formed state, the glass substrate has a stored internal tensile energy below a predetermined value for improved frangibility of the glass substrate. Below the predetermined value of the stored internal tensile energy, a display in the vehicle interior system remains readable by a viewer after the glass substrate is fractured.

Another aspect of this disclosure pertains to a vehicle interior system including a base with a curved surface, a mounting mechanism for mounting the base in a vehicle, and a glass substrate with a first major surface, a second major surface, a minor surface connecting the first major surface and the second major surface, where the second major surface is attached to the base and has a first radius of curvature. The mounting mechanism can include mounting brackets or clamps. In one or more embodiments, when an impacter having a mass of 6.8 kg impacts the first major surface at an impact velocity of 5.35 m/s to 6.69 m/s, the deceleration of the impacter is 120 g (g-force) or less. According to one or more embodiments, the base and the glass substrate in combination have a first stiffness K1, and the mounting mechanism has a second stiffness K2 that limits intrusion of the vehicle interior system to a maximum desired intrusion level. The vehicle interior system has a system stiffness Ks defined as follows: Ks = (K1 $\times$ K2) / (K1 + K2). According to one or more embodiments, the system stiffness Ks is in a range where the glass substrate does not fracture from the impact of the impacter.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

**BRIEF DESCRIPTION OF THE DRAWINGS**

Figure 1 is a perspective view illustration of a vehicle interior with vehicle interior systems according to one or more embodiments;

Figure 2 is a front plane view of a vehicle interior system according to one or more embodiments;

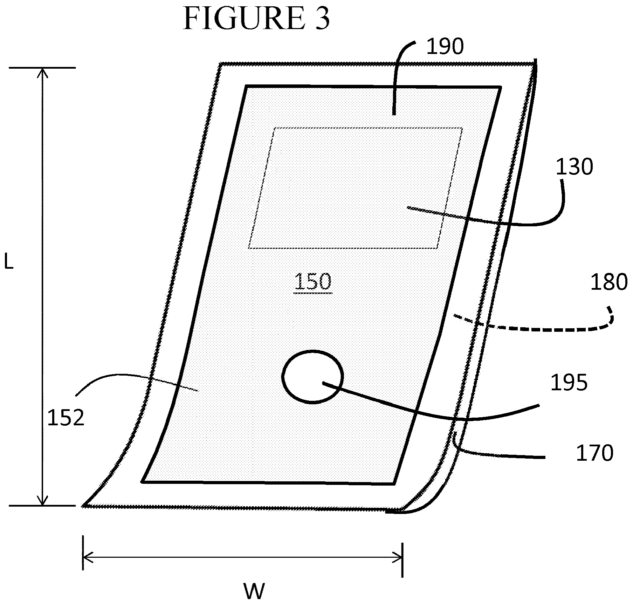

Figure 3 is an illustration of a curved glass substrate according to one or more embodiments;

Figure 4 is a side view illustration of the curved glass substrate of Figure 3 before it is curved;

Figure 5 is a perspective view of a curved glass substrate according to one or more embodiments;

Figure 6 is a side view illustration of a laminate structure according to one or more embodiments;

Figures 7A-7C are perspective views of an experimental setup for a Headform Impact Test of a display unit according to one or more embodiments;

Figure 8 is a perspective view of an alternate experimental setup for a Headform Impact Test of a display unit according to one or more embodiments;

Figure 9 is a flow diagram of a process of forming a glass substrate with a strengthened edge according to an embodiment;

Figure 10 is a flow diagram of a process of forming a glass substrate with a strengthened edge according to another embodiment;

Figure 11 is a flow diagram of a process of forming a glass substrate with a strengthened edge according to another embodiment;

Figure 12 is a flow diagram of a process of forming a glass substrate with a strengthened edge according to another embodiment;

Figure 13 is a flow diagram of a process of forming a glass substrate with a strengthened edge according to another embodiment;

Figure 14 is a cross-section view of a HIT on an edge of a glass substrate of an assembly that fails upon impact;

Figure 15 is a cross-section view of a HIT on an edge of a glass substrate according to some embodiments of this disclosure;

Figure 16 is an isometric view of an experimental setup of a HIT performed on an edge of the assembly of Figure 15;

Figure 17 is an isometric view of experimental setups for performing a ball drop test on (a) a center of a glass substrate, and (b) an edge of a glass substrate of an assembly;

Figure 18 is a graph of experimental results of a ball drop test;

Figure 19 is a side view illustration of a substrate with a low friction coating, according to one or more embodiments;

Figure 20 is a photograph showing break patterns in different types of glass substrates according to an embodiment;

Figure 21 is a photograph showing tears in two pieces of cloth used in a Headform Impact Test according to one or more embodiments;

Figures 22A-22E are side views of a vehicle interior assembly according to one or more embodiments;

Figure 23 is a graph of ion-exchange profiles of glass substrates according to one or more embodiments;

Figure 24 is view illustration of an experiment for observing particle ejection from a Headform Impact Test and a table and photographs of results of such an experiment according to one or more embodiments;

Figure 25 is an illustration of examples of different viewing angles of a vehicle interior display;

Figures 26A-26C are photographs showing different perspectives of a glass substrate with radius of curvature of 1000 mm that has fractured according to one or more embodiments;

Figures 27A-27C are photographs showing different perspectives of a glass substrate with radius of curvature of 500 mm that has fractured according to one or more embodiments;

Figures 28A-28C are photographs showing different perspectives of a glass substrate with radius of curvature of 250 mm that has fractured according to one or more embodiments;

Figure 29 is a series of views showing potential readability and laceration risk due to fractured glass substrates according to one or more embodiments;

Figures 30A and 30B show photographic results of an experiment showing fracture patterns and laceration potential of different glass substrates according to one or more embodiments;

Figures 31A and 31B show photographic results of an experiment showing fracture patterns and laceration potential of different glass substrates according to one or more embodiments;

Figures 32A and 32B show photographic results of an experiment showing fracture patterns and laceration potential of different glass substrates according to one or more embodiments;

Figure 33 is a table of store energy values of various glass substrates that are 0.7 mm thick according to one or more embodiments;

Figure 34 is a table of store energy values of various glass substrates that are 0.55 mm thick according to one or more embodiments;

Figure 35 is a table of store energy values of various glass substrates that are 0.4 mm thick according to one or more embodiments;

Figure 36 is a table of a squared stress integrals of various glass substrates that are 0.7 mm thick according to one or more embodiments;

Figure 37 is a table of a squared stress integrals of various glass substrates that are 0.55 mm thick according to one or more embodiments;

Figure 38 is a table of a squared stress integrals of various glass substrates that are 0.4 mm thick according to one or more embodiments;

Figure 39 is an example calculation of the stored tensile energy and the squared stress integral of a glass substrate according to one or more embodiments;

Figure 40 is a side illustration of an experimental setup for a vehicle interior assembly according to one or more embodiments;

Figure 41 is a schematic of showing stiffnesses of a vehicle interior assembly according to one or more embodiments;

Figure 42 is a graphical representation of data from a Head Impact Form Test according to one or more embodiments;

Figure 43 is a graphical representation of a relationship between different stiffness values of a vehicle interior assembly according to one or more embodiments;

Figure 44 is another graphical representation of a relationship between different stiffness values of a vehicle interior assembly according to one or more embodiments;

Figure 45 is a graphical representation of preferred ranges of stiffnesses for a vehicle interior assembly according to one or more embodiments;

Figure 46 is a flow diagram of a method of designing a vehicle interior assembly according to one or more embodiments;

Figures 47A-47D show photographs and resulting data from experiments for lacerations during a Headform Impact Test according to one or more embodiments.

## DETAILED DESCRIPTION

Reference will now be made in detail to various embodiments, examples of which are illustrated in the accompanying drawings. In general, a vehicle interior system may include a variety of different curved surfaces that are designed to be transparent, such as curved display surfaces, and the present disclosure provides articles and methods for forming these curved surfaces from a glass material. Forming curved vehicle surfaces from a glass material may provide a number of advantages compared to the typical curved plastic panels that are conventionally found in vehicle interiors. For example, glass is typically considered to provide enhanced functionality and user experience for many curved cover material applications, such as display applications and touch screen applications, compared to plastic cover materials.

While glass provides these benefits, glass surfaces in vehicle interiors should also meet performance criteria for both passenger safety and ease of use. For example, certain regulations (e.g., ECE R 21 & FMVSS201) require vehicle interiors to pass the Headform Impact Test (HIT). The HIT involves subjecting a vehicle interior component, such as a display, to an impact from a mass under certain specific conditions. The mass used is an anthropomorphic headform. The HIT is intended to simulate the impact of the head of a driver or passenger against the vehicle interior component.

The criteria for passing the test include the force of the deceleration of the headform not exceeding 80 g (g-force) for longer than a 3 ms period, and the peak deceleration of the headform being less than 120 g. As used in the context of the HIT, "deceleration" refers to the deceleration of the headform as it is stopped by the vehicle interior component. Beside these regulatory requirements, there are additional concerns when using glass under these conditions. For example, it may be desirable for the glass to remain intact and not fracture when subjected to the impact from the HIT. In some case, it may be acceptable for the glass to fracture, but the fractured glass should behave in a way to reduce the chance of causing lacerations on a real human head. In the HIT, laceration potential can be simulated by wrapping the headform in a substitute material representing human skin, such as a fabric, leather, or other material. In this way, laceration potential can be estimated based on the tears or holes formed in the substitute material. Thus, in the case where the glass fractures, it may be desirable to decrease the chance of laceration by controlling how the glass fractures.

To our knowledge, no such product is sold in an auto interior application where flat glass is held in place, under a bent state (hereafter called cold bending, cold formed, and/or cold bent). The current situation for glass on the inside of a vehicle has been limited to either flat glass or glass bent to very large bend radii (> 1000mm) by using a hot forming process, which has deficiencies. Soda-lime glass, for example, can fracture as a result of the HIT, and thus could cause lacerations. Plastic may not fracture or lacerate, but it scratches easily and degrades the quality of displays. Current curved glass articles are typically formed using these hot forming processes, which have deficiencies For example, hot-forming processes are energy intensive and increase the cost of forming a curved glass component, relative to the cold-bending process discussed herein. In addition, hot-forming processes typically make application of glass coating layers, such as anti-reflective coatings, significantly more difficult. For example, many coating materials cannot be applied to a flat piece of glass material prior to the hot-forming process because the coating material typically will not survive the high temperatures of the hot-forming process. Further, application of a coating material to surfaces of a curved glass substrate after hot-bending is substantially more difficult than application to a flat glass substrate. In addition, Applicant believes that by avoiding the additional high temperature heating steps needed for thermal forming, the glass articles produced via the cold-forming processes and systems discussed herein have improved optical properties and/or improved surface properties than similarly shaped glass articles made via thermal-shaping processes. However, certain aspects of the embodiments discussed herein may be applicable to hot-formed glass, as well.

A first aspect of the instant application pertains to a vehicle interior system. The various embodiments of the vehicle interior system may be incorporated into vehicles such as trains, automobiles (e.g., cars, trucks, buses and the like), seacraft (boats, ships, submarines, and the like), and aircraft (e.g., drones, airplanes, jets, helicopters and the like).

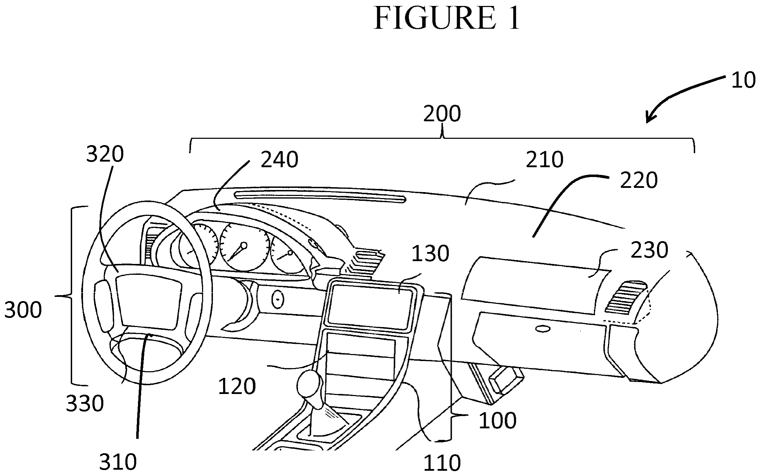

Figure 1 illustrates an exemplary vehicle interior 10 that includes three different embodiments of a vehicle interior system 100, 200, 300. Vehicle interior system 100 includes a center console base 110 with a curved surface 120 including a curved display 130. Vehicle interior system 200 includes a dashboard base 210 with a curved surface 220 including a curved display 230. The dashboard base 210 typically includes an instrument panel 215 which may also include a curved display. Vehicle interior system 300 includes a dashboard steering wheel base 310 with a curved surface 320 and a curved display 330. In one or more embodiments, the vehicle interior system may include a base that is an arm rest, a pillar, a seat back, a floor board, a headrest, a door panel, or any portion of the interior of a vehicle that includes a curved surface.

The embodiments of the curved display described herein can be used interchangeably in each of vehicle interior systems 100, 200, and 300. Further, the curved glass articles discussed herein may be used as curved cover glasses for any of the curved display embodiments discussed herein, including for use in vehicle interior systems 100, 200, and/or 300.

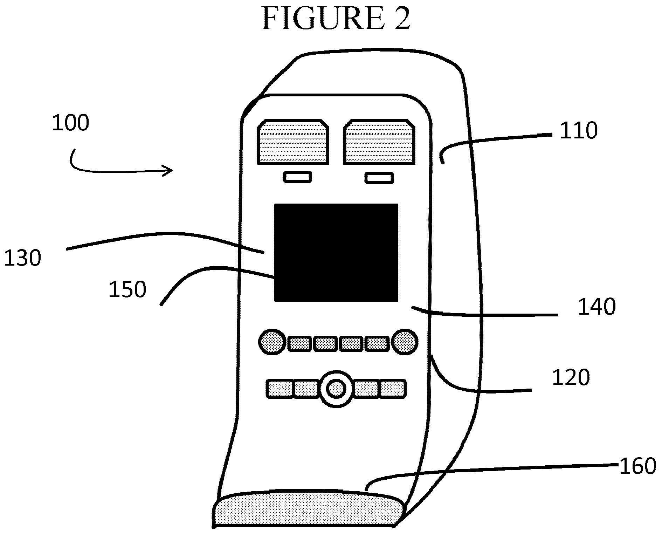

As shown in Figure 2, in one or more embodiments the curved display 130 includes an adhesive or adhesive layer 160 between the glass substrate 140 and the display module 150. The adhesive may be optically clear. In some embodiments, the adhesive is disposed on a portion of the glass substrate 140 and/or the display module 150. For example, the glass substrate may include a periphery adjacent the minor surface defining an interior portion, and the adhesive may be disposed on at least a portion of the periphery. The thickness of the adhesive may be tailored to ensure lamination between the display module 150 (and more particularly the second glass substrate) and the glass substrate 140. For example, the adhesive may have a thickness of about 1 mm or less. In some embodiments, the adhesive has a thickness in a range from about 200 $\mu$m to about 500 $\mu$m, from about 225 $\mu$m to about 500 $\mu$m, from about 250 $\mu$m to about 500 $\mu$m, from about 275 $\mu$m to about 500 $\mu$m, from about 300 $\mu$m to about 500 $\mu$m, from about 325 $\mu$m to about 500 $\mu$m, from about 350 $\mu$m to about 500 $\mu$m, from about 375 $\mu$m to about 500 $\mu$m, from about 400 $\mu$m to about 500 $\mu$m, from about 200 $\mu$m to about 475 $\mu$m, from about 200 $\mu$m to about 450 $\mu$m, from about 200 $\mu$m to about 425 $\mu$m, from about 200 $\mu$m to about 400 $\mu$m, from about 200 $\mu$m to about 375 $\mu$m, from about 200 $\mu$m to about 350 $\mu$m, from about 200 $\mu$m to about 325$\mu$m, from about 200 $\mu$m to about 300 $\mu$m, or from about 225 $\mu$m to about 275 $\mu$m.

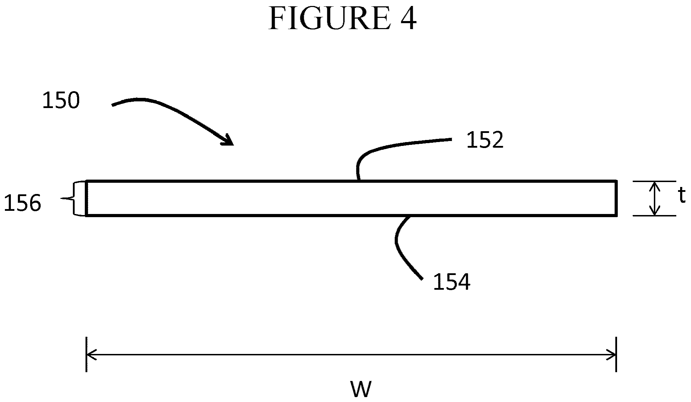

Referring to Figure 4, the glass substrate 150 includes a first major surface 152 and a second major surface 154 opposite the first major surface. A minor surface 156 connects the first major surface 152 and the second major surface 154, where a thickness t of the glass substrate 150 is defined as the distance between the first major surface 152 and the second major surface 154.

As used herein, the terms "cold-bent," "cold-bending," "cold-formed," or "cold-forming" refers to curving the glass substrate at a cold-form temperature which is less than the softening point of the glass (as described herein). A feature of a cold-formed glass substrate is asymmetric surface compressive between the first major surface 152 and the second major surface 154. In one or more embodiments, prior to the cold-forming process or being cold-formed, the respective compressive stresses in the first major surface 152 and the second major surface 154 of the glass substrate are substantially equal. In one or more embodiments in which the glass substrate is unstrengthened, the first major surface 152 and the second major surface 154 exhibit no appreciable compressive stress, prior to cold-forming. In one or more embodiments in which the glass substrate is strengthened (as described herein), the first major surface 152 and the second major surface 154 exhibit substantially equal compressive stress with respect to one another, prior to cold-forming. In one or more embodiments, after cold-forming, the compressive stress on the surface having a concave shape after bending increases. In other words, the compressive stress on the concave surface is greater after cold-forming than before cold-forming. Without being bound by theory, the cold-forming process increases the compressive stress of the glass substrate being shaped to compensate for tensile stresses imparted during bending and/or forming operations. In one or more embodiments, the cold-forming process causes the concave surface to experience compressive stresses, while the surface forming a convex shape after cold-forming experiences tensile stresses. The tensile stress experienced by the convex surface following cold-forming results in a net decrease in surface compressive stress, such that the compressive stress in convex surface of a strengthened glass sheet following cold-forming is less than the compressive stress on the same surface when the glass sheet is flat.

When a strengthened glass substrate is utilized, the first major surface and the second major surface (152, 154) are already under compressive stress, and thus the first major surface can experience greater tensile stress during bending without risking fracture. This allows for the strengthened glass substrate to conform to more tightly curved surfaces.

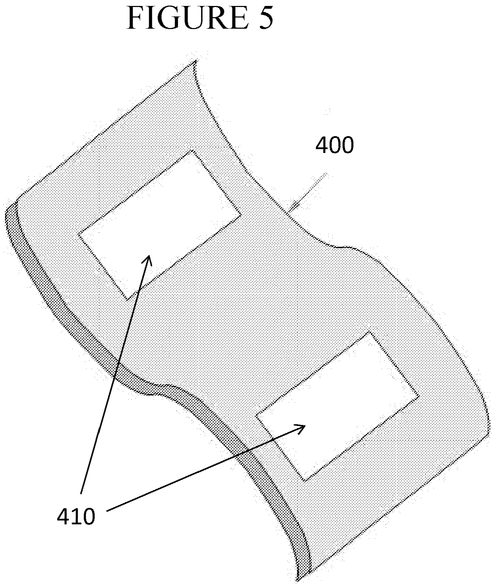

As shown in Figure 5, a glass substrate 400 can include one or more regions 410 intended to show a display. In addition, a glass substrate according to some embodiments can be curved in multiple regions of the glass substrate and in multiple directions (i.e., the glass substrate can be curved about different axes that may or may not be parallel). Accordingly, shapes and forms the possible embodiments are not limited to the examples shown herein. This an example of curved cover glass substrate that can be used with multiple embodiments discussed herein. The glass substrate 400 of these embodiments can have a complex, flexible surface, and may include one or more flat, conical, cylindrical surfaces, and may have functional coatings (like anti-glare, and/or anti-reflective, and easy-to-clean) on the user-interfacing surface. The glass substrate can also have coatings for decoration (like black ink, color ink having one color and/or multiple colors, which can be used to form patterns and images).

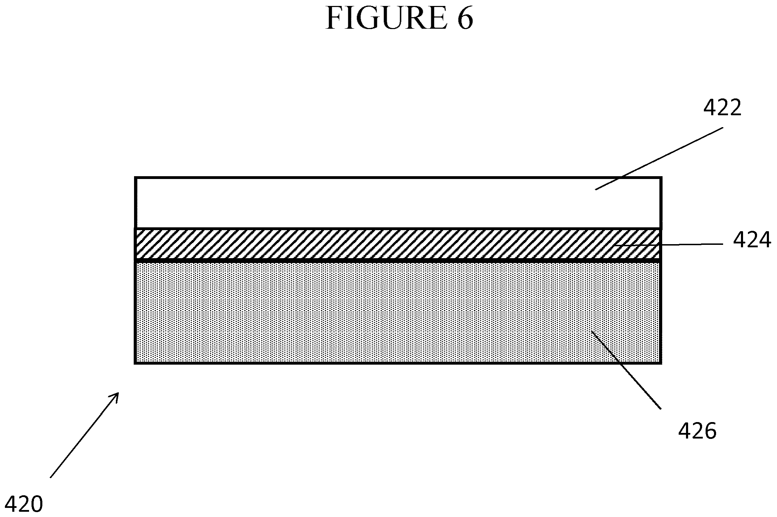

Figure 6 shows a cross-section view of a laminate structure 420 of a vehicle interior system according to one or more embodiments. The laminate structure includes a glass substrate 422, an additional substrate or support surface 426, and an adhesive disposed between the glass substrate 422 and the support surface 426. Although the laminate 420 is shown in a flat configuration in Figure 6, it should be understood that regions of the laminate 420 can be curved. In such cases, a radius of curvature of the glass substrate 422 can correspond to a radius of curvature of the support surface 426. In some case, the radius of curvature of the glass substrate 422 is within about 10% or less of the radius of curvature of the support surface.

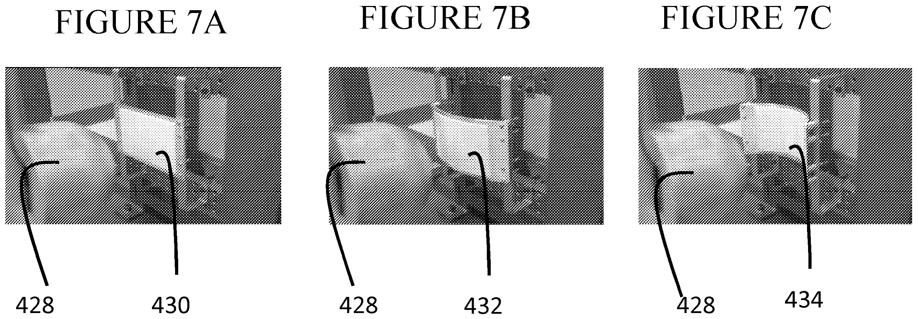

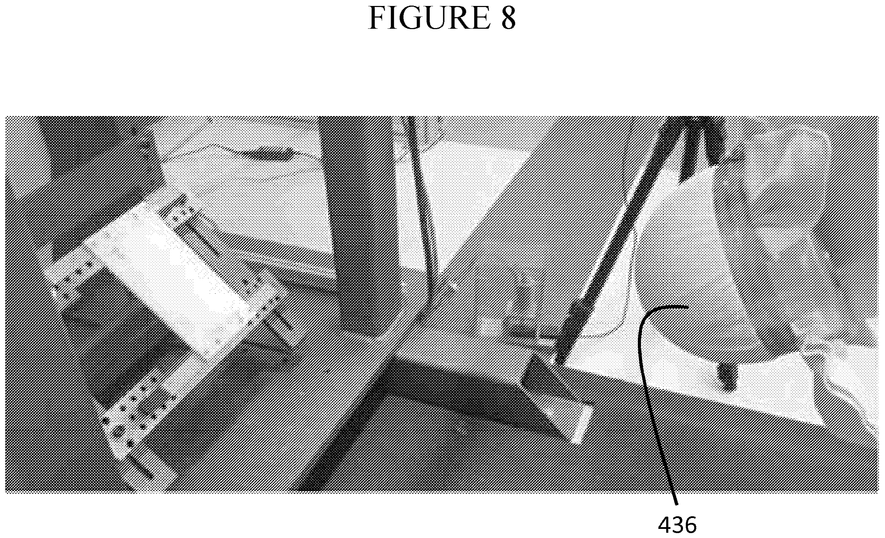

Referring to Figures 7A-7C, examples of the equipment and configuration of a headform impact test (HIT) is shown. This equipment was used for testing examples of embodiments discussed herein. As shown in Figures 7A-7C, the headform 428 can be used to test a flat surface 430, a concave surface 432, or a convex surface 434. Figure 8 shows an enlarged view of the HIT equipment and setup. In Figure 8, the headform is wrapped in a fabric material 436 used to test for the potential of the glass substrate to cause lacerations in human skin.

One vulnerability of glass substrates used in the HIT is the edge impact performance. Edge impact performance refers to the ability of a vehicle interior component to pass the HIT when the edge of a cover glass is hit by the headform. The edge of a typical cover glass has inherently lower strength compared to the surface, due at least in part to flaws that are created during cutting and grinding processes that form the edge. Thus, existing edge processing methods for glass materials in vehicle interiors are not able to provide sufficient edge strength. To mitigate this safety concern due to edge performance, edges are usually protected or hidden. However, this restricts the introduction of stylish designs, like bezel-less cover glass displays (or with minimal bezel). Despite these challenges for glass edge performance, regulations and vehicle manufactures require safe performance. As discussed elsewhere in this disclosure, relevant safety regulations include Federal Motor Vehicle Safety Standard (FMVSS) 201 issued by the National Highway Traffic Safety Administration of the United States Department of Transportation, and ECE-R21 of the United Nations. The FMVSS201 and ECE R21 regulations describe the requirements for automotive interiors components during a crash event. Per these regulations: "[a] point within the head impact area is impacted by a 15-pound, 6.5-inch diameter head form at a velocity of 15 miles per hour. The deceleration of the head form shall not exceed 80 g continuously for more than 3 milliseconds (ms)."

Other than safety regulations adopted by regulatory bodies, designers and manufacturers of vehicles and vehicle components may have additional design specifications or tests. These tests may include a ball drop test on a glass edge to simulate a local impact, for example. Also, relevant design specifications may include a desire from automotive companies that cover lens do not break during the impact event, but that, in the case of breaking (i.e., catastrophic failure), there are no large pieces generated that may injure the vehicle occupant.

The importance of improved HIT and edge impact performance has grown and will continue to grow with consumer demand for more and larger in-vehicle displays and glass surfaces. This demand may grow even larger with the advent of autonomous vehicles, as passengers will look for interactive surface and connectivity to the outside world during transport. In addition, there has already been a trend in displays to have thinner bezels or no bezels at all, leading to exposed glass edges. Nonetheless, existing solutions to these challenges have been insufficient. For example, retention films applied to a cover glass (e.g., anti-splinter film) are used to keep particles of glass together during fracture. However, such films have reduced effectiveness during edge impact testing. Part of the reason for this is that no retention film is provided across the thickness of the glass edge. Thus, there remains a need for systems, methods, and materials for improved edge impact performance. Accordingly, in one or more embodiments discussed herein, methods of producing a vehicle interior system with improved edge impact performance are discussed. The systems and methods discussed herein relate to curved or flat cover glass interiors, and/or a curved or flat display assemblies used for vehicle interior applications.

In the case of curved glass substrates, the glass may preferably be cold bent around one axis (cylindrical bend) or multiple axes, and held into shape by adhering or bonding to a substrate, and its edge is processed as discussed herein for improved strength. This curved cover glass item with improved edge strength can also be a hot formed glass, with the edge processed similarly for improved strength.

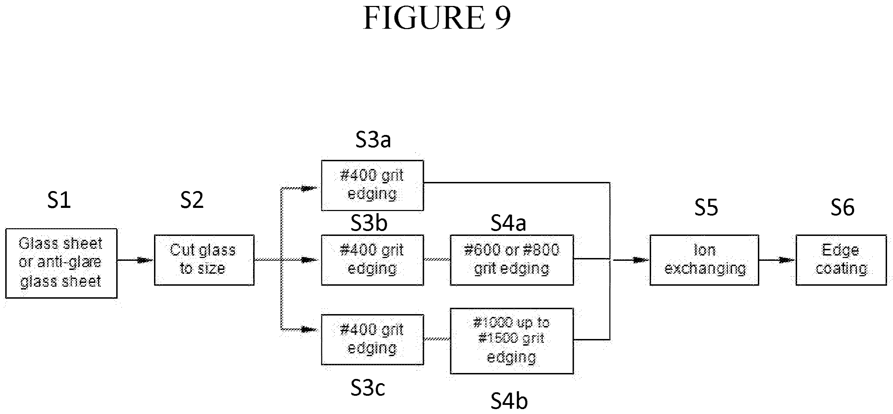

An example of an embodiment of these methods is shown in Figure 9. According to this method, a glass sheet is provided (S1) and cut to the desired size (S2). This is followed by grinding the edge with a grinding tool. The type of grinding can be chosen from among different options shown in steps S3a-S3c. In step S3a, a grinding tool with #400 grit is used. If step S3a is chosen, the process next proceeds to step S5, which is an ion exchange process for the glass sheet. Finally, an edge coating can be applied in step S6. If step S3b is chosen, a grinding tool with grit #400 to grind the edge, and then the glass sheet is subjected to an additional grinding of the edge using grit #600 or #800. After the additional grinding step, the process proceeds to steps S5 and S6. If step S3c is chosen, a grinding tool with grit #400 is used to grind the edge, and then the glass sheet is subjected to an additional grinding of the edge using grit #1000 or #1500. After the additional grinding step, the process proceeds to steps S5 and S6 as before.

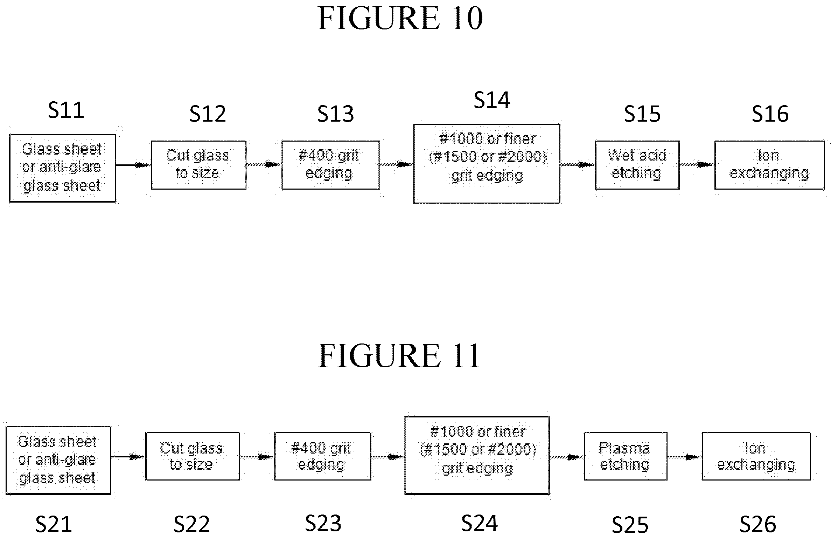

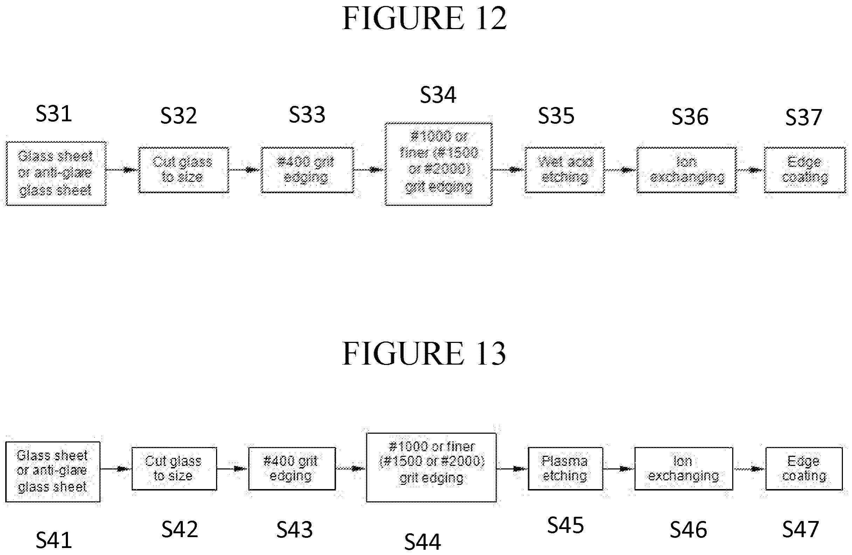

Figures 10 and 11 shown additional embodiments of methods of enhancing the edge performance. In Figure 10, steps S11-S13 correspond to steps S1-S3 in Figure 9. Then, an additional grinding step is performed using grit #1000 or finer (e.g., #1500 or #2000). Following step S14, the glass sheet is subjected to a wet acid etching (S15) followed by an ion exchange process (S16). Similarly, in Figure 11, steps S21-S23 correspond to steps S1-S3 in Figure 9 and step S24 corresponds to step S14 in Figure 10. Next, a plasma etching step S25 is performed. Finally, an ion exchange step S26 is performed. The methods in Figures 10 and 11 can also be supplemented with a polymer edge coating as shown by steps S37 and S47 in Figures 12 and 13. The other steps of Figures 12 and 13 correspond to those of Figure 10 and 11, respectively. In one or more embodiments, these methods of enhancing the edge impact performance can include using stiff adhesive in the cover glass/display assembly. Such an adhesive may have a Young's modulus of greater than or equal to 300 MPa, or greater than or equal to 800 MPa after curing, for example. The wet acid etching discussed above can be performed with HF or HF plus $H_2SO_4$, for example.

Vehicle interior systems formed using the above methods to improve edge impact performance experience lower impact force during the HIT. Therefore, the resulting stress in the system is reduced. The use of a stiffer adhesive, for example, results in lower bending stress of the glass or vehicle interior system during mechanical contact with the headform of the HIT.

In some embodiments, a system including a cover glass adhered to an underlying substrate with a high-modulus adhesive enabling passage of the HIT and meeting of other vehicular safety requirements for vehicle interiors (e.g., the above-discussed glass breakage safety requirements by manufacturers and other regulations). As used herein, "high modulus" refers to a high Young's modulus, or a Young's modulus that is higher than conventional used in the application of glass in vehicle interiors. As discussed above, such an adhesive may have a Young's modulus of greater than or equal to 300 MPa, or greater than or equal to 800 MPa after curing, for example. The meaning of "high modulus" is further defined by way of the examples and embodiments discussed below. Such a system with a high-modulus adhesive is useful and effective where impacts on the glass edge are a concern, such as when the edge of the cover glass is not protected by a bezel or some other means. The use of a high modulus adhesive between a cover glass and substrate results in much improved edge impact performance as compared to conventional systems. For example, using a high-modulus adhesive as described herein can prevent fracture of the glass during a HIT where the impact is on the edge of the glass at a 45-degree angle while meeting the regulatory criteria of 3-ms deceleration being less than 80 g. It is believed that the unexpected good results are achieved by the high-modulus adhesive restricting the growth and propagation of flaws in the glass.

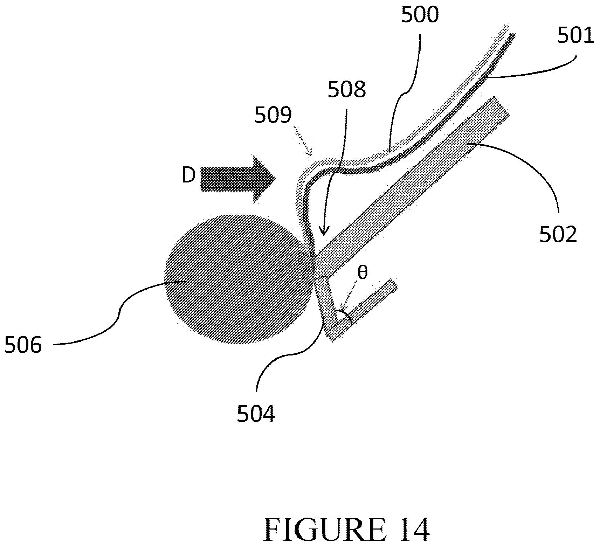

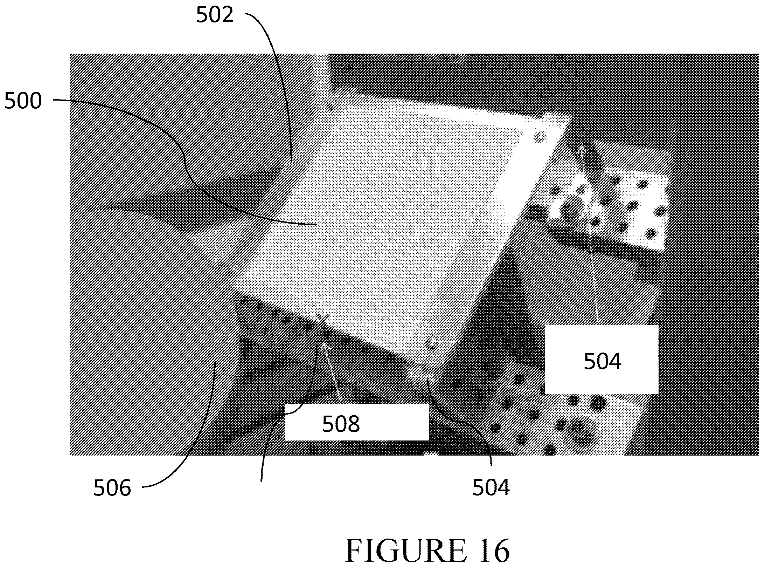

Figure 14 is a side-view schematic of a head-form impact test (HIT) performed at a 45-degree angle on a conventional glass-adhesive-substrate with conventional adhesive. Specifically, the glass 500 is bonded by an adhesive 501 to a substrate 502, such as an aluminum plate. The substrate is mounted on a bracket 504. A headform 506 is impacted on an edge of the glass 500 at a point of impact 508. The impact is performed such that the direction D of the headform 506 at impact is at 45 degrees relative to the outward-facing major surface of the glass. Figure 14 shows the system at the time of or just after impact by the headform 506. As shown, the glass 500 buckles (509) under the impact, which leads to failure on the edge or either major surface of the glass 800. The angle θ of the bracket arm prior to impact from the headform 506 is 90 degrees. The low modulus adhesive material can be, for example, VHB tape. In contrast to the low-modulus VHB tape, embodiments of this disclosure use a high-modulus adhesive or high-modulus epoxy. Figure 16 is a photograph from an experimental setup corresponding to the schematic in Figure 14. The size of the glass surface in Figure 16 is 6 inches by 6 inches, while the size of the aluminum plate is 6 inches by 8 inches.

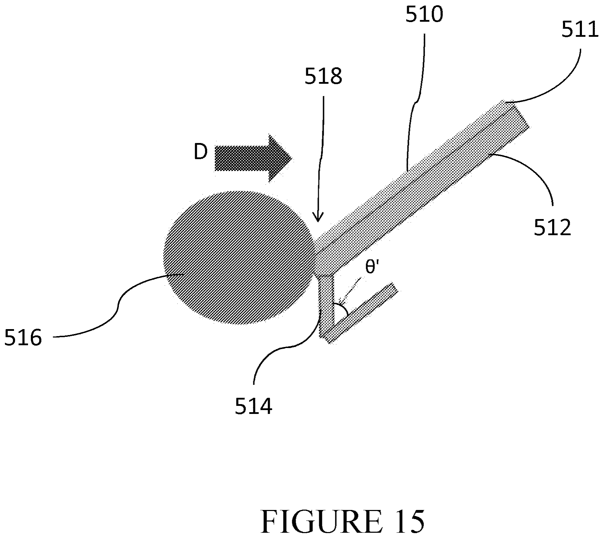

In contrast, Figure 15 shows an embodiment of the present disclosure using a high-modulus adhesive. The conventional adhesive 501 of Figure 14 has a relatively low modulus compared to the adhesive 511. In Figure 15, the glass 510, high-modulus adhesive 511, and substrate 512 (e.g., aluminum plate), which are mounted on brackets 514, are impacted point 518 by the headform 516 traveling in the direction D, which is 45 degrees with respect to the major surface of glass 510. However, the glass 510 does not buckle at it did in Figure 14, and the HIT is passed without glass breakage.

Examples of Systems Using High-Modulus Adhesive

In one example of the above described embodiment using a high-modulus adhesive, a module system was developed with a cover glass having a thickness of 1.1 mm. The cover glass used was a strengthened, alkali-aluminosilicate glass (e.g., Gorilla® glass from Corning Incorporated). The module also included an aluminum plate (Al 6061) with a thickness of 0.19 inches. The housing assembly contained mounting brackets made with low carbon steel (0.125 inches thickness). The size of the glass surface was 6 inches by 6 inches, while the size of the aluminum plate is 6 inches by 8 inches. The stiffness of module and housing assembly was chosen in such a way so that the 3-ms deceleration during the HIT is less than 80 g. The cover glass was laminated on the aluminum plate using a high-modulus adhesive with a modulus of 1.55 GPa (e.g., Masterbond EP21TDCHT-LO Epoxy). The edge of the cover glass was aligned to be flush against the edge of the aluminum plate. This enables the head form impact test to be performed on the edge of glass at an angle of 45 degrees. Testing was performed in such a way so as the head impact the edge of the glass during the test. Results indicate that the 3-ms deceleration, max deceleration, and intrusion was 46.3 g, 101.7 g, and 45.7 mm, respectively. Furthermore, the cover glass did not break during the test. Without wishing to be bound with theory, it is believed that the high modulus structural adhesive severely restricts the growth or propagation of flaws, resulting in unexpectedly good edge impact performance. Additionally, the adhesive helps to minimize buckling of glass thereby avoiding failure on the glass edge and on either major surface of the glass.

Table 1 summarizes the construction and experimental results for Examples 1-6, with a setup corresponding to the above in Figure 16. Test standards were in accordance with FMVSS201 and ECE-R21. Per these regulations: "A point within the head impact area is impacted by a 15-pound, 6.5-inch diameter head form at a velocity of 15 miles per hour. The deceleration of the head form shall not exceed 80 g continuously for more than 3 milliseconds (ms)."

Table 1: Head from Impact Test at 45 degrees on glass edge.

|  | Configuration | 3-ms deceleration | Peak deceleration | Max Intrusion | Glass after HIT |
|---|---|---|---|---|---|
| Example 1 | 1.1 mm Gorilla® Glass (400 grit edge finish), 3M VHB 4952 (1.1 mm), 0.19" Al plate, 0.125" U-clamps | 45.1 g | 65.5 g | 49.5 mm | Break |
| Example 2 | 1.1 mm Gorilla® Glass (1500 grit edge finish), 3M VHB 4952 (1.1 mm), 0.125" Al plate, 0.125" U-clamps | 42.1 g | 49.5 g | 59.4 mm | Break |
| Example 3 | 1.1 mm Gorilla® Glass (400 grit edge finish), 3M VHB 5909 (0.3 mm), 0.19" Al plate, 0.125" U-clamps | 45.5 g | 90.8 g | 48.2 mm | Break |

(continued)

|  | | Configuration | 3-ms deceleration | Peak deceleration | Max Intrusion | Glass after HIT |
|---|---|---|---|---|---|---|
| | Example 4 | 1.1 mm Gorilla® Glass (400 grit edge finish), Masterbond EP21TDCHT-LO (0.3 mm), 0.19" Al plate, 0.125" U-clamps | 46.3 g | 101.7 g | 45.7 mm | No break |
| | Example 5 | 1.1 mm Gorilla® Glass (400 grit edge finish), Masterbond EP21TDCHT-LO (0.3 mm), 0.125" Al plate, 0.125" U-clamps | 45.7 g | 67.3 g | 51.5 mm | No break |
| | Example 6 | 1.1 mm Gorilla® Glass (400 grit edge finish), 5 mm edge border with 3M VHB 5909 (0.3 mm) and remaining with Masterbond EP21TDCHT-LO (0.3 mm), 0.19" Al-plate, 0.125" U-clamps. | 43.0 g | 95.3 g | 47.8 mm | No break |

In Table 1, Example 1 (comparative) used Gorilla® glass with standard edge finish (#400 grit), and 3M VHB 4952 (1.1 mm thickness) structural adhesive to laminate cover glass to the 0.19" Al-plate. The 3-ms deceleration, peak deceleration, and intrusion were 45.1 g, 65.5 g, and 49.5 mm, respectively. The cover glass fractured during the test.

In Example 2 (comparative), Gorilla® glass with finer edge finish (#1500 grit) was used with 3M VHB 4952 (1.1 mm thickness) structural adhesive was utilized to laminate cover glass to the 0.125" Al-plate. The 3-ms deceleration, peak deceleration, and intrusion were 42.1 g, 49.5 g, and 59.4 mm, respectively. The cover glass fractured during the test.

In Example 3 (comparative), Gorilla® glass with finer edge finish (#400 grit) was used with 3M VHB 5909 (0.3 mm thickness) structural adhesive was utilized to laminate cover glass to the 0.19" Al-plate. The 3-ms deceleration, peak deceleration, and intrusion were 45.5 g, 90.8 g, and 48.2 mm, respectively. The cover glass fractured during the test. This example could be compared to Example 1 and 2, and shows that thickness of adhesive, or edge finish are not significant factors towards improving 45 degreed HIT performance.

Example 4, in accordance with an embodiment of this disclosure, uses Gorilla® glass with standard edge finish (#400 grit). Masterbond EP21TDCHT-LO Epoxy (1.55 GPa) with 0.3 mm thickness was used as a structural adhesive to laminate cover glass to 0.19" Al-plate. The 3-ms deceleration, peak deceleration, and intrusion were 46.3 g, 101.7 g, and 45.7 mm, respectively. The cover glass did not fracture during the test. The example shows the improved performance with high modulus epoxy adhesive.

Example 5, in accordance with another embodiment of this disclosure, uses Gorilla® glass with standard edge finish (#400 grit). Masterbond EP21TDCHT-LO Epoxy (1.55 GPa) with 0.3 mm thickness was used as a structural adhesive to laminate cover glass to 0.125" Al-plate. The 3-ms deceleration, peak deceleration, and intrusion were 45.7 g, 67.3 g, and 51.5 mm, respectively. The cover glass did not fracture during the test. The example showcases the performance improvement with high modulus epoxy adhesive.

Example 6 (inventive): This example utilized Gorilla® glass with standard edge finish (#400 grit). 3M VHB 5909 (0.3 mm thickness) with a width of 5 mm was applied on the edge of the glass. The remaining portion utilized Masterbond EP21TDCHT-LO Epoxy (1.55 GPa) with 0.3 mm thickness. The glass with dual adhesive was then laminated onto 0.19" Al-plate. The 3-ms deceleration, peak deceleration, and intrusion was 43.0 g, 95.3 g, and 47.8 mm, respectively. The cover glass did not fracture during the test. The example showcases the performance improvement with high modulus epoxy adhesive, and at the same time suggests that edge of glass is perhaps less of a factor for performance improvement than the epoxy. Without wishing to be bound by theory, the use of high modulus epoxy avoids buckling of glass and thereby avoiding fracture on the edge or major surfaces of the glass.

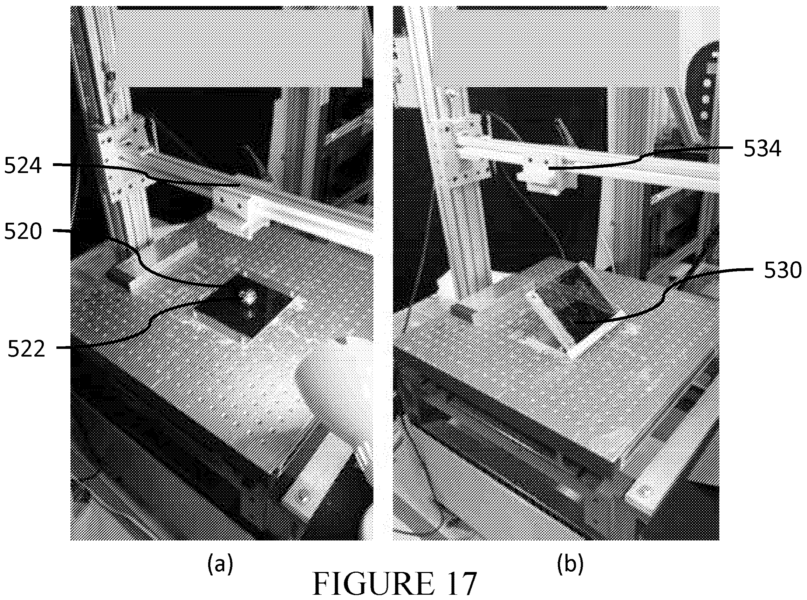

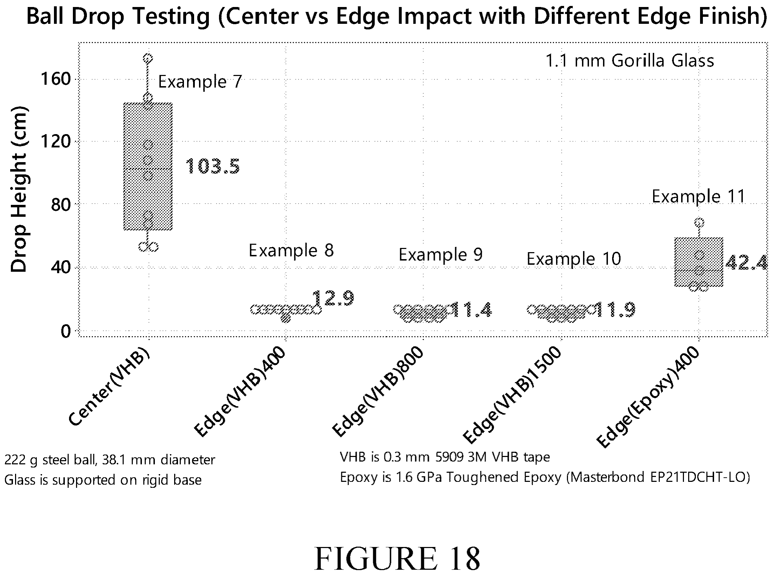

Figure 17 shows an experimental setup for a ball drop test on (a) a flat assembly and (b) an assembly arranged at a 45-degree angle relative to the ball drop direction. Specifically, in Figure 17(a), the assembly 520 consists of a glass-adhesive-substrate construction such as that shown in Figure 14. Even after the ball 522 is dropped from the point 524, the glass of assembly 520 does not fail. However, when the ball hits an edge of the glass at a 45-degree angle, as shown in Figure 17(b), the glass does fail, illustrating the challenges for edge impact. Figure 18 shows the experimental results of ball drop testing performed on the center and edge of glass (i.e., in the edge testing, the major surface of the glass was 45 degrees relative to the drop direction of the ball) with different edge finish and structural adhesive. Example 7 represents a baseline case for surface impact. Example 8 represents a baseline case for edge impact at 45 degrees with standard edge finish (400 grit) and VHB structural tape between glass and base substrate. Example 9 and 10 are similar conditions to that of 8, but with a different edge finish. Example 11 is similar to 8 with the difference being that a high modulus epoxy adhesive is utilized instead of VHB tape.

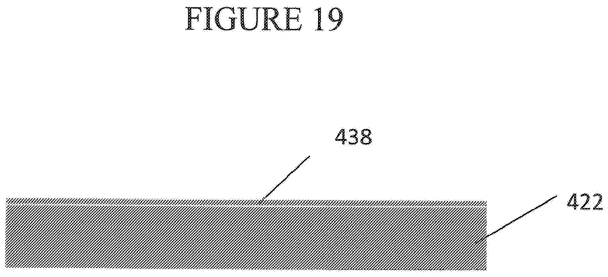

Figure 19 shows a glass substrate that can be used in accordance with one or more embodiments discussed herein. The glass substrate 422 has a low-friction coating 438 on a passenger- or user-facing surface. In one embodiment, the glass substrate 422 shown in Figure 19 can be, for example, a strengthened glass with a thickness less than 1 mm, a compressive stress of greater than 700 MPa, and a depth of compression of about 40 $\mu$m. The glass substrate 422 can have one or more coatings 438 (such as anti-reflection, anti-glare, and easy-to-clean coatings, for example) designed to have lower coefficients of friction than an uncoated glass substrate. The low-friction coating 438 can reduce trauma experience by a passenger from impact with the glass substrate 422. This is accomplished by reducing the deceleration forces caused by friction on the surface of the glass substrate.

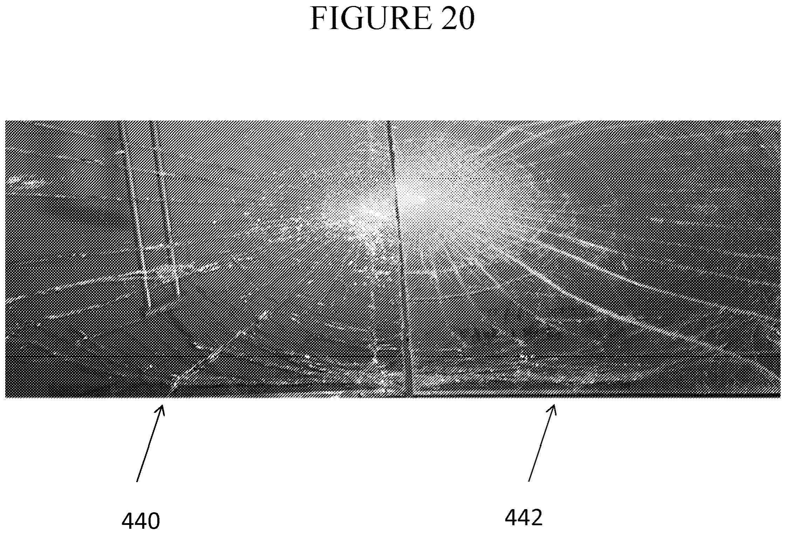

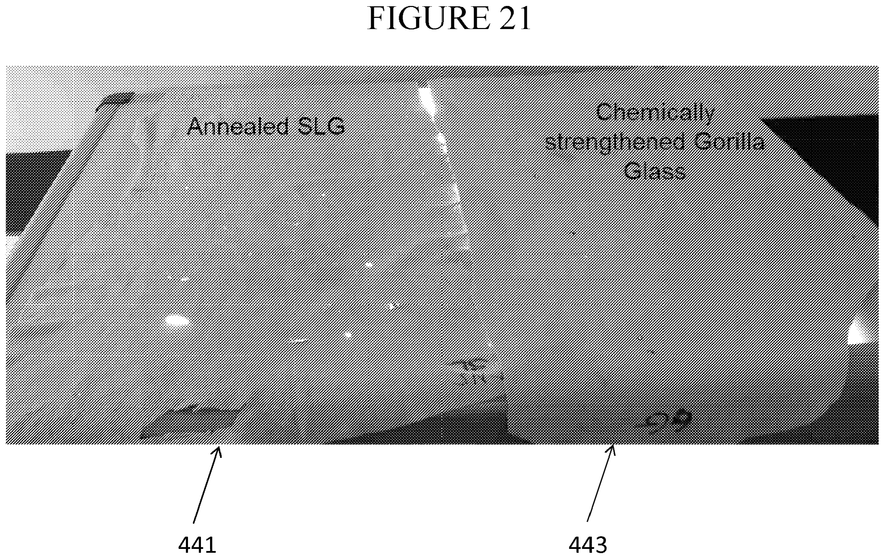

In addition, because it may be possible for the glass substrate 422 to fracture, embodiments include features to reduce the chance of lacerating human skin. This reduced laceration potential can be accomplished, for example, by engineering the residual stress profile of the glass substrate 422 to ensure that, if the glass substrate 422 fractures due to high flexural stresses, the glass breaks into small or fine particles that are less prone to cause lacerations. An example of this can be seen the comparison shown in Figure 20 of the fracture patterns of an annealed glass 440 and a chemically strengthened glass 442. The finer breakage pattern of the chemically strengthened glass results in finer glass particles, which are less likely to lacerate. Figure 21 shows the coverings 441, 443 used to cover the headform in the HIT used for the annealed glass 440 and the chemically strengthened glass 442, respectively. In this example, the coverings 441 and 443 are chamois. With the aid of a backlight behind the coverings 441, 443, the covering 441 used on the annealed glass has more and/or larger tears and holes as compared to the covering 443 used on the chemically strengthened glass. Therefore, the chemically strengthened glass 442 is less likely to lacerate a passenger in the event of breakage.

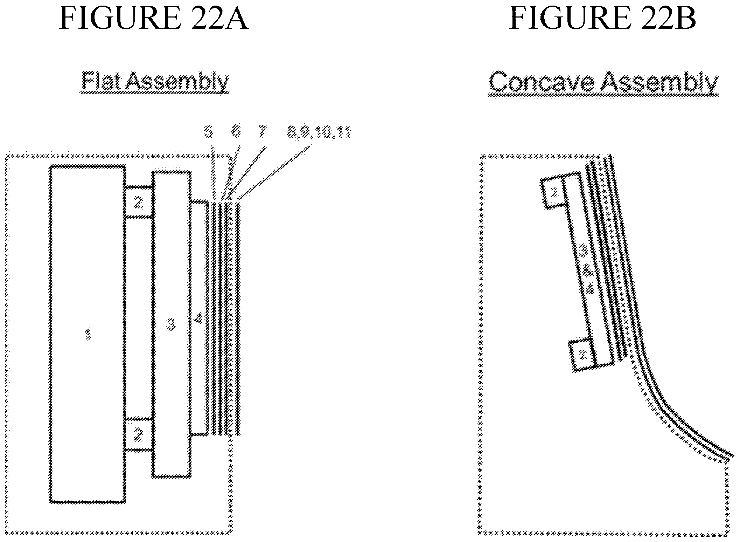

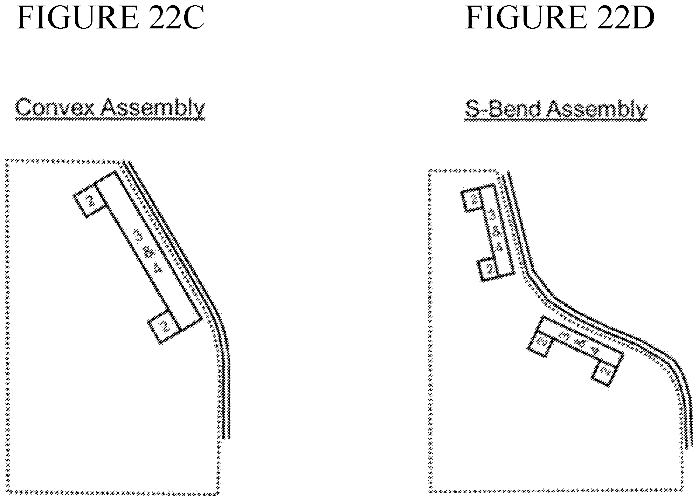

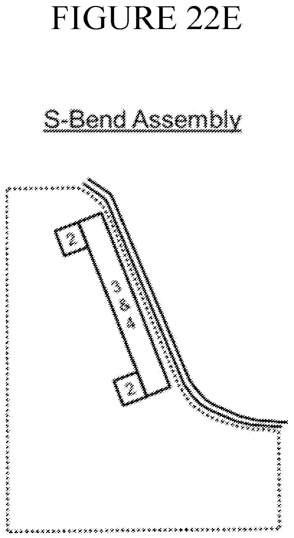

Generally referring to Figures 22A-22E, examples of various vehicle interior systems according to embodiments discussed herein are shown in cross-section. These systems include a mechanical frame or fixture 1 permanently attached to the vehicle. A mounting bracket 2 is used to attach user-facing vehicle interior component, such as a decorative dash component or display, to the mechanical frame or fixture 1 of the vehicle. In these examples, the mounting bracket 2 is attached to a back side of a display housing 3 and/or a display stack 4. The display stack 4 can include an electronic board, backlight unit, light guide plate, defuser films, etc. On a front side of the display stack 4, there can be, for example, a liquid optically clear raison (LOCR) or optically clear adhesive (OCA) film 5, a touch panel 6, an additional LOCR or OCA film 7, a coating 8 that can be an anti-splinter coating (particularly for an air-gap design) or ink used for a deadfront effect or other decoration, a cover glass 9, which may include an anti-glare coating, an anti-reflective (AR) coating 10, and other possible coatings 11, Figures 22A-22E also illustrate various shapes for the vehicle interior system, such as a flat assembly (Figure 22A), a concave assembly (Figure 22B), a convex assembly (Figure 22C), and S-bend assemblies (Figures 22D and 22E).

As discussed above, embodiments can include a coating 8, which can be an anti-splinter coating. However, in some embodiments where the glass substrate is strengthened (e.g., chemically strengthened as described herein), an anti-splinter film is not attached to the glass substrate. It has been discovered that, even without an anti-splinter film, embodiments using a chemically strengthened glass substrate can exhibit the impact resistance and improved frangibility characteristics described herein. Accordingly, in one or more embodiments, the cover glass 9 may be substantially free of an anti-splinter coating or other coating that is intended to prevent splintering of glass after impact or after breaking.

In addition to improving safety of vehicle interior systems, aspects of one or more embodiments can also result in improved readability of a display even after a cover glass on the display breaks. This can be beneficial by allowing a driver or passenger to continue to use the display after accidental breakage of the cover glass, or in the event that access to the display is needed in an emergency after a traumatic vehicle accident. In one or more of these embodiments, the cover glass for the vehicle interior system uses a glass substrate that is cold formed into the vehicle interior system such that the cold bending is confined to cylindrical bends, including S-shaped bends, with bend radii confined to 1000 mm or greater in a convex or concave curved surface of the glass substrate. According to one or more embodiments, tighter bends (i.e., bend radii targets of less than 1000 mm) can be achieved by tuning the compressive stress (CS) and depth of layer (DOL) resulting from chemical strengthening within frangibility, central tension (CT), and/or stored tensile energy limits. The resulting vehicle interior systems can exhibit enhanced post-breakage safety and readability.

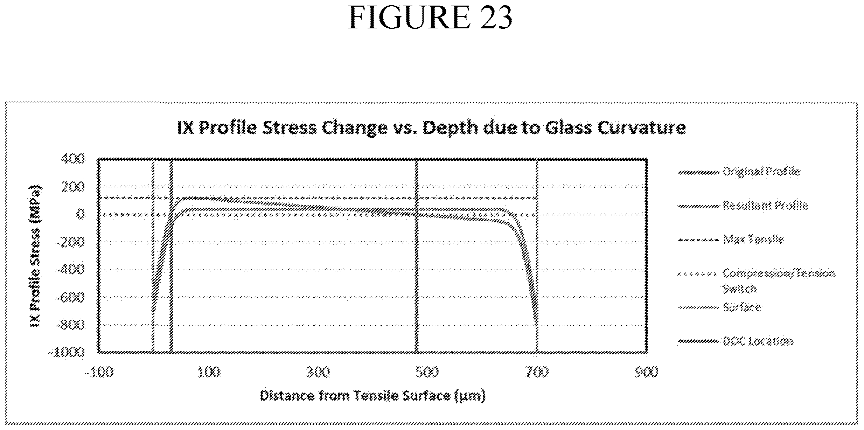

In particular, the breakage pattern of a vehicle interior system can be controlled by confining the bending limits of a standard chemically strengthened flat glass substrate within a frangibility, CT, or stored tensile energy limit. In addition, the breakage pattern of a vehicle interior system can be controlled by confining the bending limits of a CS/DOL-tuned, chemically strengthened flat glass substrate within a frangibility, CT, or stored tensile energy limit. Figure 23 shows changes in ion-exchange profile stress through the thickness of a glass substrate, where the changes in ion-exchange profile stress is due to glass curvature. The left side of Figure 23 is a convex surface and the glass substrate, and the right side is a concave surface. The glass substrate used for Figure 23 is 0.7 mmm thick with a CS of 700 MPa and a DOL of 46 $\mu$m, and, as shown in Figure 23, is bent to a radius of curvature of 250 mm. The original profile stress starts relatively lower on the convex side and then increases to the resultant profile stress, while the original profile stress on the concave side is higher than the resultant profile stress. The lower dotted line at 0 MPa shows where the profile stress switches from compression to tension, and the upper dotted line marks the maximum tension level.

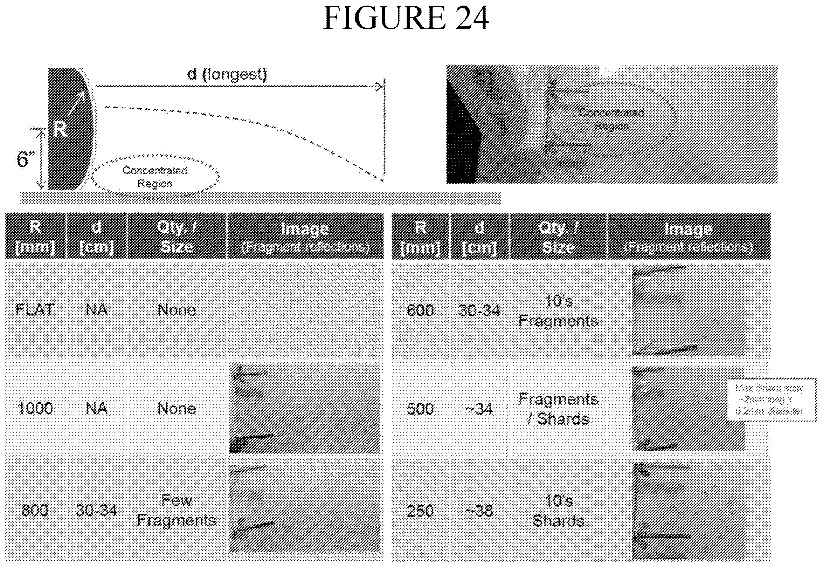

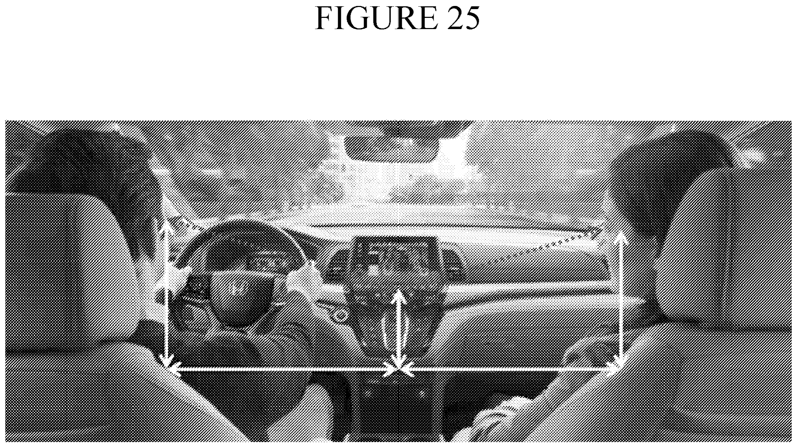

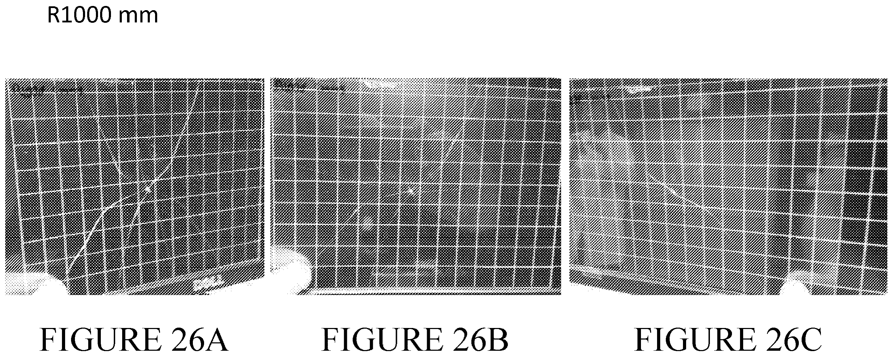

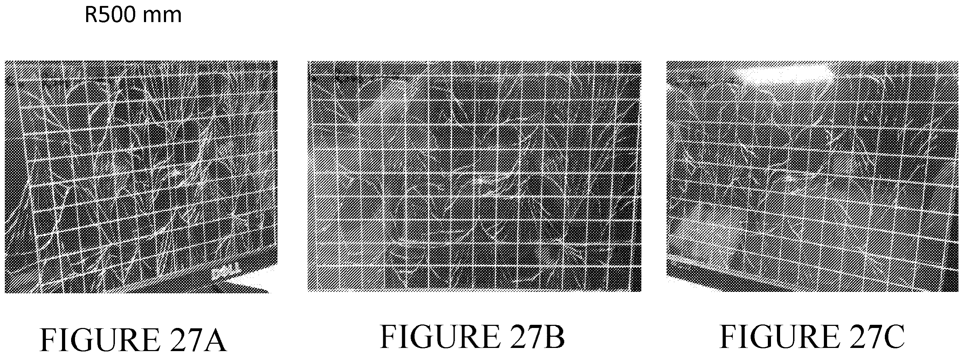

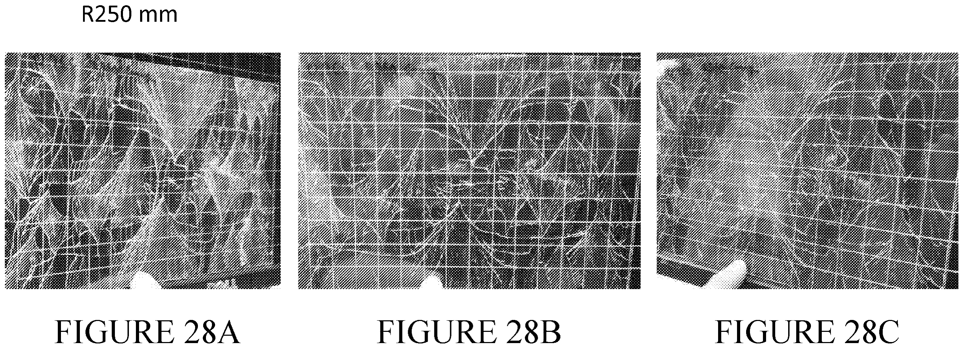

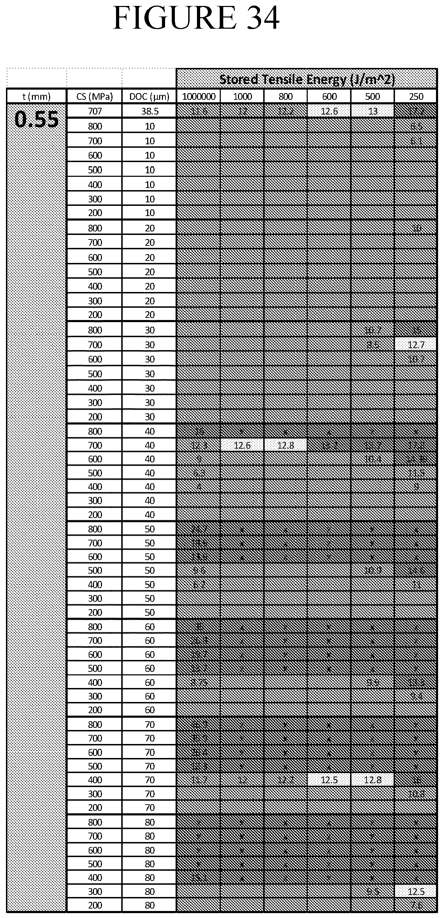

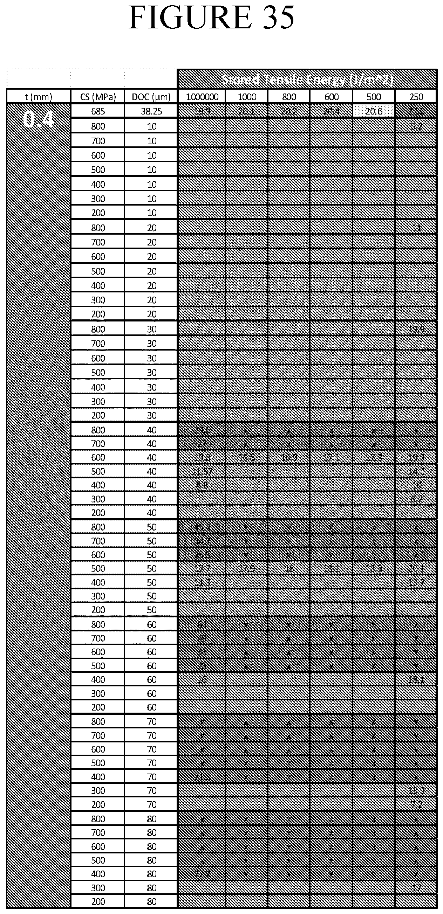

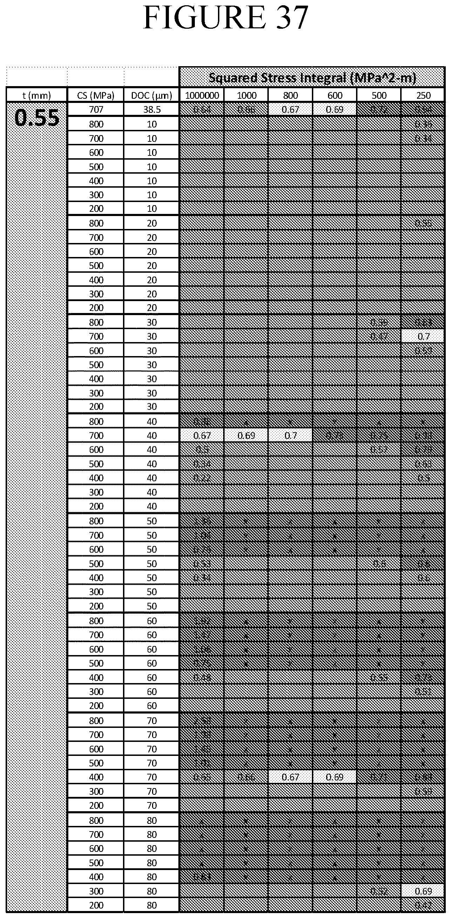

Figures 24-37 show examples of the results of fracture. For example, Figure 24 shows an experiment to measure the fragments reflected back from the glass substrate according to various bend radii. As can be seen in the table, the number of fragments increases as the radius decreases, and there is some indication that the diameter of the fragments also increases with decreased bending radius. Figures 26A-28C show the impact on visibility for glass substrates of various radii as seen from a left (driver-side) viewing angle, center viewing angle, and right (passenger-side) viewing angle. As can be seen, flatter curves (i.e., larger radii) generally have improved visibility after failure.

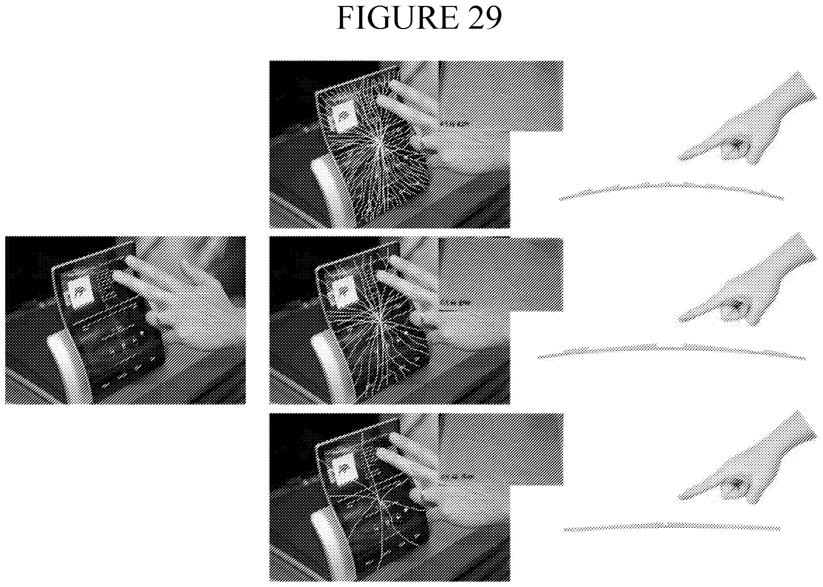

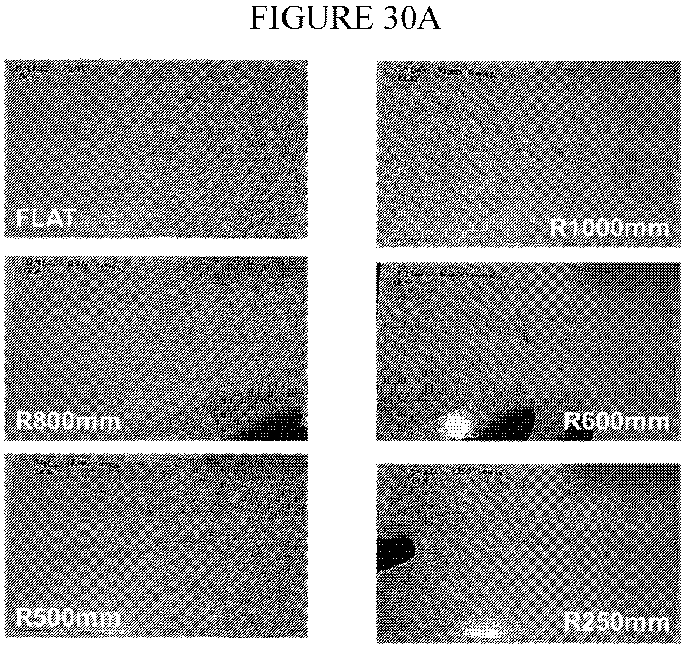

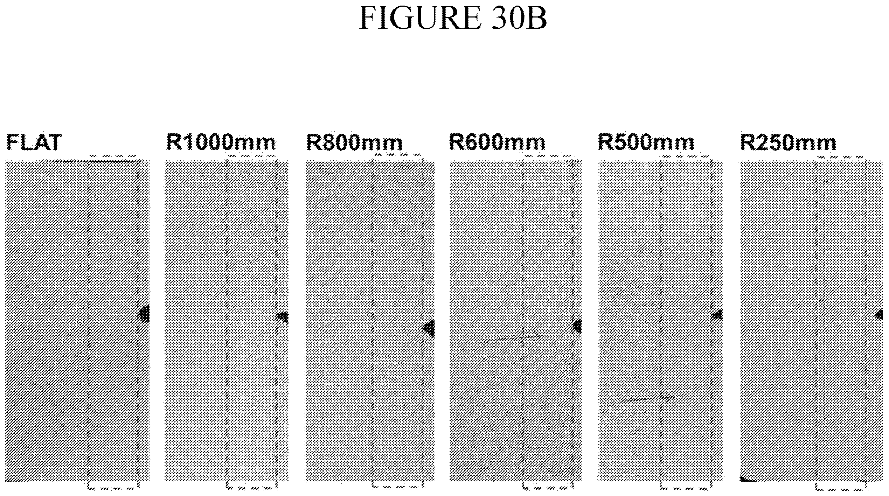

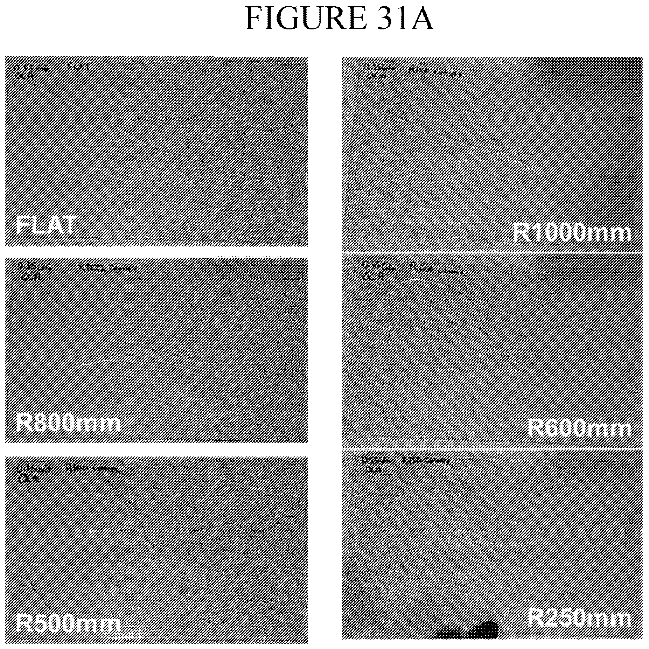

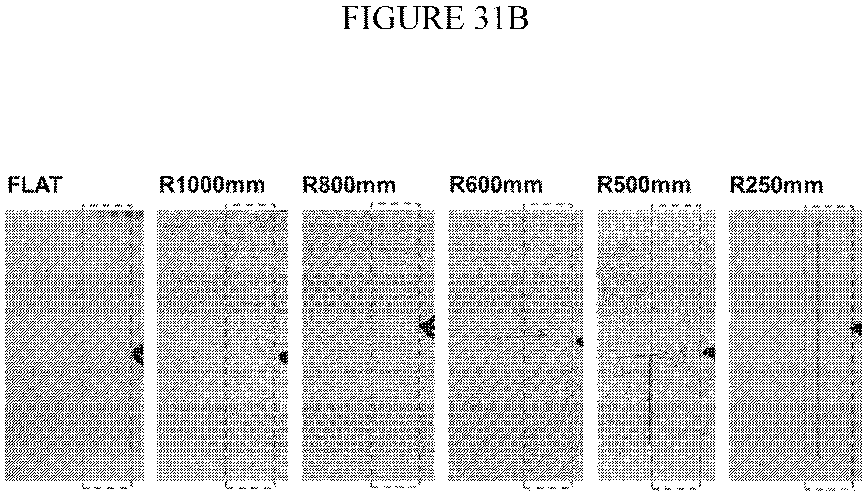

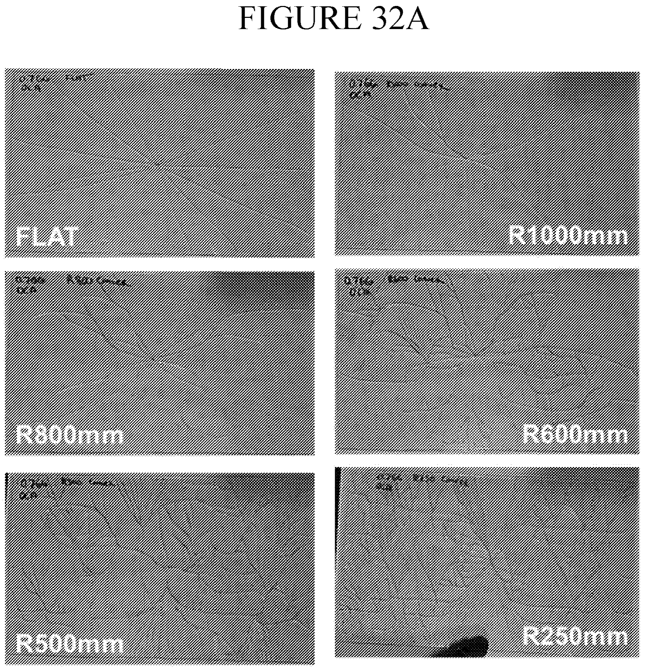

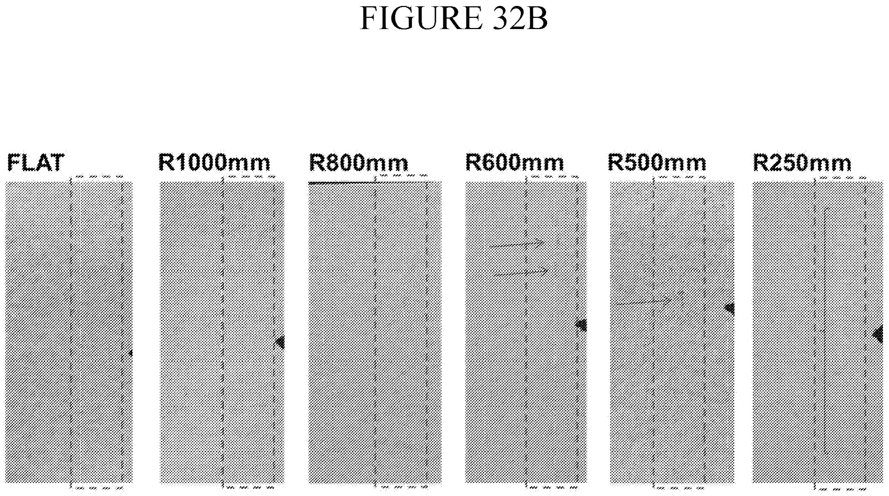

Likewise, the more complex fracture patterns resulting from smaller radii, as illustrated in Figure 29, can make a touch display more difficult to use. This effect and the risk of laceration was measured in an experiment, the results of which are shown in Figures 30A-32B. Figure 30A shows fracture patterns for glass substrates that are 0.4 mm thick with a CS of 685 MPa, and a DOL of 38 $\mu$m. The glass substrates underwent cold bending (with the exception of one substrate) resulting in curve radii of 1000 mm, 800 mm, 600 mm, 500 mm, and 250 mm. The curve radius of the flat substrate is not shown. After being fractured in the HIT, towels were rubbed against the fractured surface to assess laceration risk. The towels used on the substrates having smaller curve radii showed more damage, as shown in Figure 30B. Similarly, Figure 31A shows the results of a similar experiment, but with glass substrates that are 0.55 mm thick with a CS of 707 MPa and a DOL of 39 $\mu$m. The glass substrates were cold formed to the same curvature radii as in Figure 30A. Again, towels used on the smaller radii glass showed more wear and/or tearing, as shown in Figure 31B. Finally, the same experiment was repeated with glass substrates that were 0.7 mm thick having a CS of 719 MPa and a DOL of 40 $\mu$m. The results of this experiment as shown in Figures 32A and 32B, which again show more complex breakage patterns and more tearing of the towels for smaller radii.

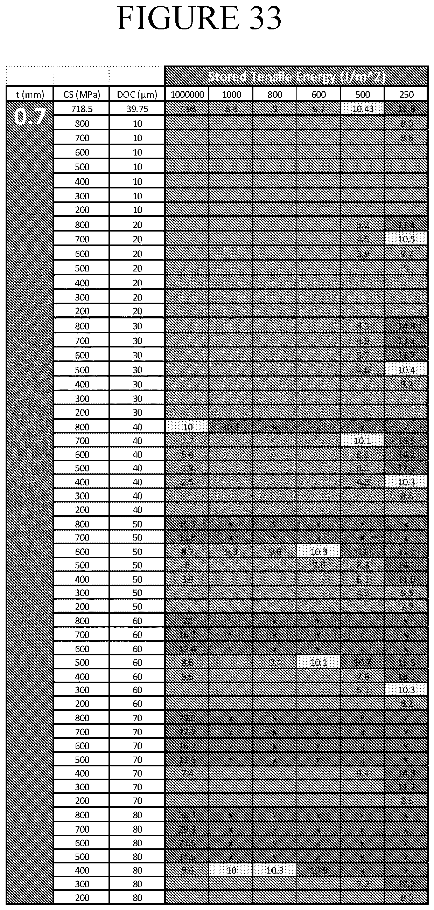

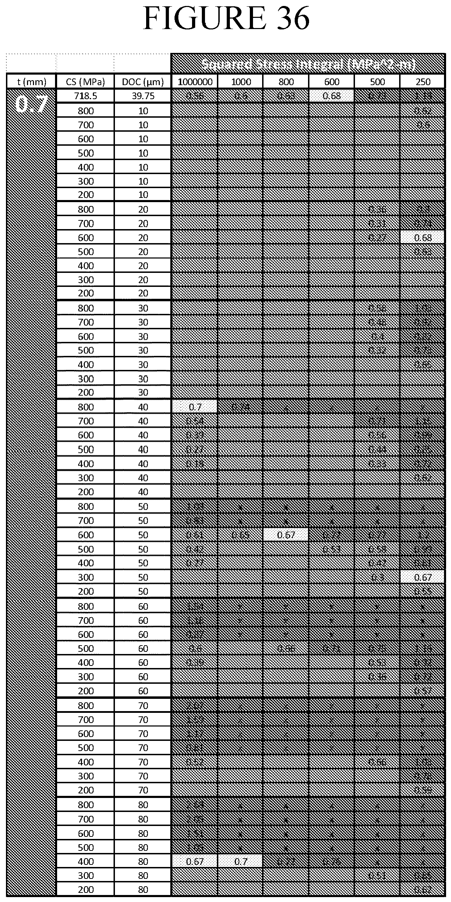

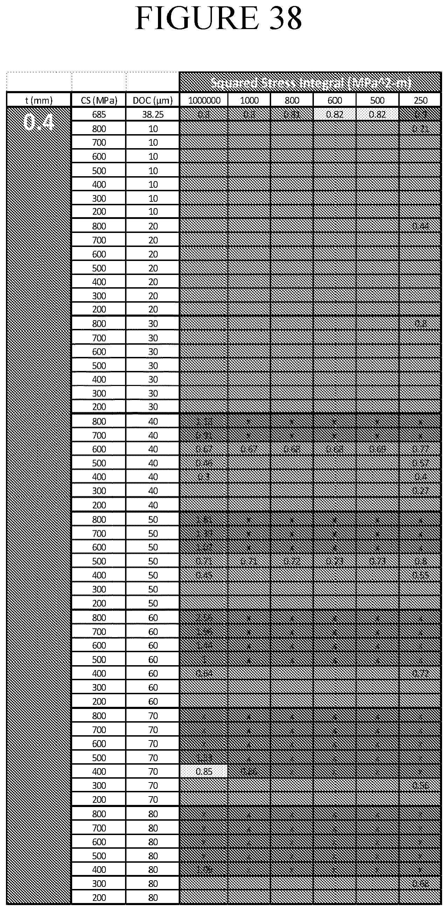

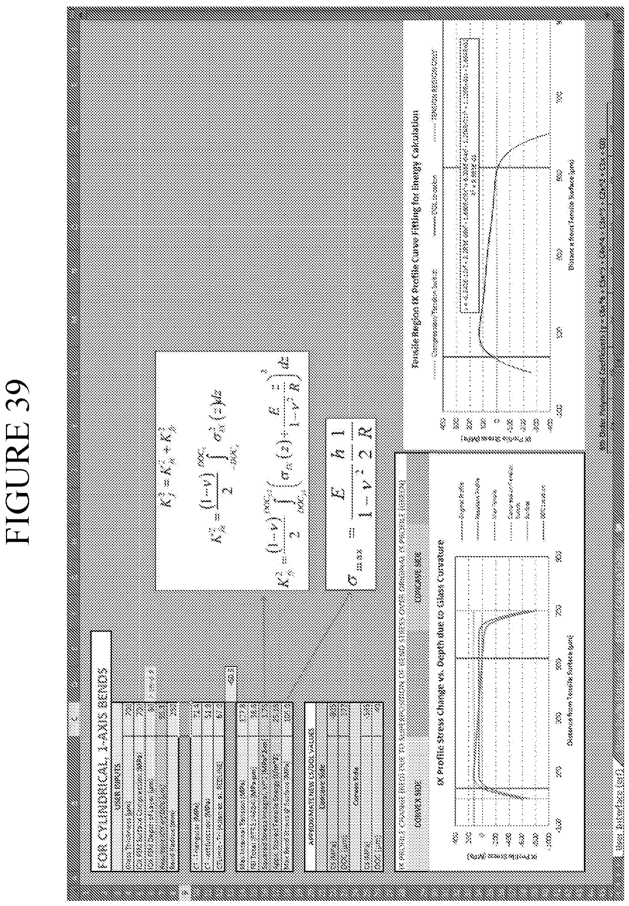

However, for a given stored internal tensile energy target, the CS and DOL can be tailored to safely achieve smaller bend radii. For example, if the stored internal tensile energies are 10.5 J/m$^2$ for glass thickness of 0.7 mm, 13 J/m$^2$ for glass thickness of 0.55 mm, and 21 J/m$^2$ for glass thickness of 0.4 mm, those energies can be used to tune the CS and DOL for each glass thickness to achieve a desired bend radius. Examples of the results of such a calculation are shown in Figures 33-35. As another example, for a given squared stress integral target, the CS and DOL can be tailored to safely achieve smaller bend radii. For example, if the squared stress integrals are 0.7 MPa^2-m for glass thickness of 0.7 mm, 0.7 MPa^2-m for glass thickness of 0.55 mm, and 0.85 MPa^2-m for glass thickness of 0.4 mm, those values can be used to tune the CS and DOL for each glass thickness to achieve a desired bend radius. Examples of the results of such a calculation are shown in Figures 36-38. The calculations used for the tables shown in Figures 32-38 are shown in Figure 39. In particular, the following are used for the squared stress integral (1) and the approximate stored tensile energy (2):

$$K_f^2 = K_{fx}^2 + K_{fy}^2$$

$$K_{fx}^2 = \frac{(1-v)}{2} \int_{-DOC_x}^{DOC_x} \sigma_{IX}^2(z)\,dz$$

$$K_{fy}^2 = \frac{(1-v)}{2} \int_{DOC_{y1}}^{DOC_{y2}} \left( \sigma_{IX}(z) + \frac{E}{1-v^2}\frac{z}{R} \right)^2 dz$$

$$\left. \right\} \quad (1)$$

$$\sigma_{max} = \frac{E}{1-v^2}\frac{h}{2}\frac{1}{R} \quad (2)$$

In one or more embodiments, for glass that is 0.4, 0.55, and 0.7 mm thick, the above-discussed limits of maximum energy (i.e., 21, 13, and 10.5 J/m$^2$, respectively) and squared stress integral (i.e., 0.85, 0.7, and 0.7 MPa^2-m, respectively) are appropriate for vehicle interior systems. However, these are used for example only, and it is contemplated that other limits can be used to determine suitable radii for different CS and DOL values of various glass substrates. The main driver of the limits discussed above is safety for the vehicle occupants. Glass substrates were investigated for fracture particle ejection, post-fracture readability, and post-fracture laceration risk. The limits are suggested to prevent risk to the safety of the vehicle occupants after evaluation of these three criteria. It is noted that the driver of this risk is the amount of stored energy within the glass, which is a function of thickness, CS, DOL, and bend radius. Thus, if a stored energy limit (Energy or Kf^2) can be quantified, as has been shown here, it can be used to alter CS & DOL of various thickness glass to achieve tighter bend radii and still be within the safety limits of particle ejection, readability, and laceration risk.

The design of safe vehicle interior systems can also be approached from the standpoint of considering the system as a whole, which can include the glass, stack, or laminate structure and, in some case, display, but also how those components are attached to the vehicle. All of these factors together can determine how the system as a whole performs in the HIT or in an actual vehicular crash. As discussed above, in the headform impact test for automotive interiors, a point within the head impact area on the product is impacted by a 6.8 kg, 165 mm diameter head form at a velocity of 6.68 m/s. Per the regulation (FMVSS201), the maximum deceleration of the head form shall not exceed 80 g for a period 3 ms of higher. In addition to these requirements, there is often a desire that the cover glass not break during the impact event. A factor in the results of the test is stiffness of the system, which includes stiffnesses for individual components and the system as a whole. Accordingly, one or more embodiments are directed to determining the individual stiffness of a glass-fronted vehicle interior system or display, and of the mounting hardware, such as a mounting bracket, that attaches system to the vehicle. Such methods can be used to generate design guidelines for the overall module design, which can reduce design iterations and wasting resources on performance testing.

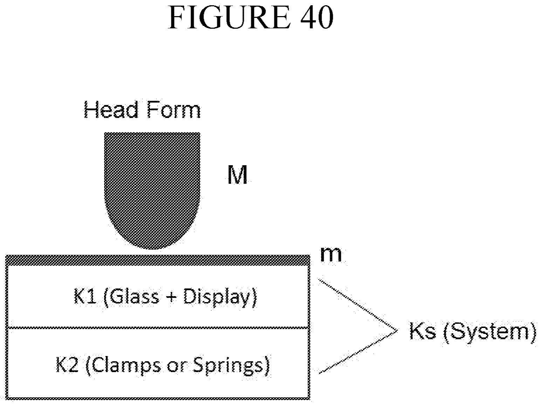

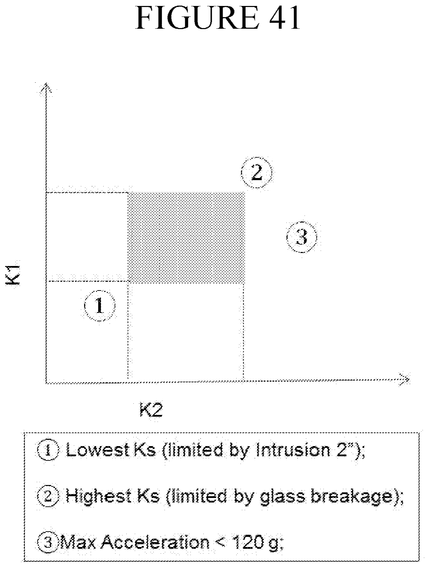

According to one or more embodiments of this method of designing the module, a design windows is provided for the glass-fronted module or display and the mounting hardware, brackets, or clamps. When designed according to this analysis method, the resulting product will pass the HIT. In addition, a resulting product can pass the HIT without the cover glass breaking. Figure 40 shows a schematic of a headform from the HIT as it is about to impact the system. In this example, the system includes a cover glass and display (or other substrate) with a stiffness K1, and a mounting mechanism (such as clamps or springs) with a stiffness K2. The combination of K1 and K2 results in a stiffness for the system, Ks. Figure 41 is an example of a diagram that illustrates an optimal area for the stiffness of the system Ks and the individual stiffnesses K1 and K2. In this example, the " 1" denotes a lower bound by a maximum amount of intrusion that can be accommodated. Intrusion refers to the amount that the system can move backwards or in the direction of the mounting hardware. In this example, the maximum intrusion is considered to be 2 inches, but it could be more or less depending on the vehicle design. The "2" denotes an upper limit for Ks that is limited by the risk of the glass breaking. The "3" denotes a maximum acceleration (or deceleration) as required by the HIT standard. The shaded region denotes an appropriate range of stiffnesses for the design. While real vehicle interior systems can be complex and include many components, this is a simplified analytical model where the display or substrate and the cover glass are considered as one component (module) with stiffness K1, and the supporting structure (mounting brackets, clamps) have stiffness K2. The system stiffness is then defined as Ks = (K1 × K2) / (K1+K2). According to some embodiments, the principal behind this method can be extended to accommodate more complex arrangements in the vehicle interior systems.

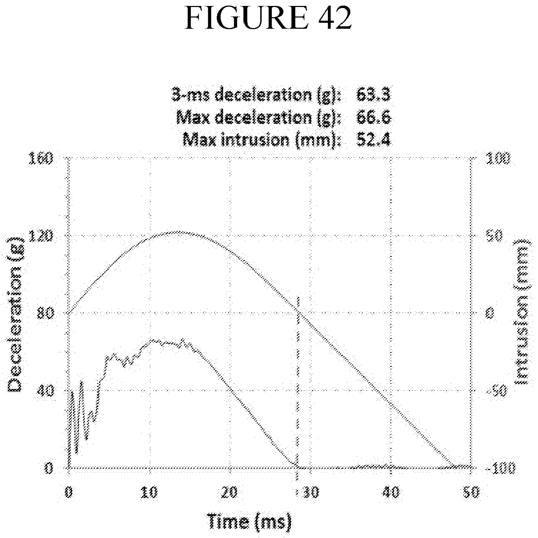

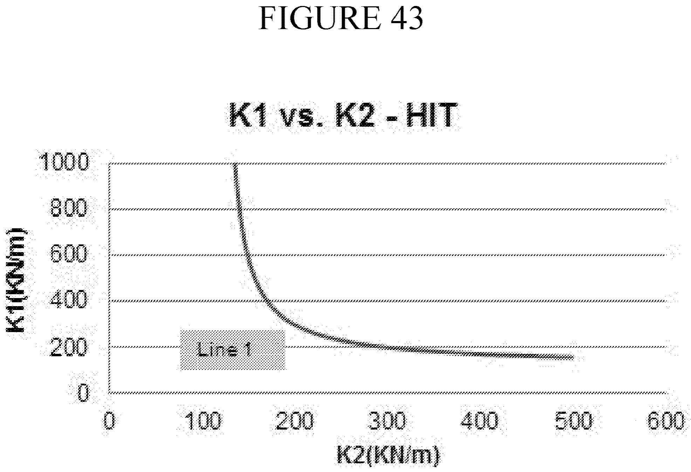

As an example of the above-described method, consider Figure 42, which shows deceleration and intrusion (deflection) as a function of time in milli-seconds. In this example, the 3-ms deceleration, maximum deceleration, and intrusion were 63.3 g, 66 g, and 52.4 mm, respectively. The system stiffness Ks is then calculated from the experimental data. Based on the maximum intrusion value, Ks is required to be greater than a particular number: 120 kN/m, in this example. The correlation between module stiffness (K1) and mounting brackets stiffness (K2) for system stiffness (Ks) to meet this requirement is shown in Figure 43 (Line 1). Any combination of K1 and K2 above the line in Figure 43 provides system intrusion value of less than 50.8 mm.

Now consider the additional limitation of no breakage of the cover glass in the module. In general, when stored strain energy of one component is higher than its critical energy, then the component will break. The stored strain energy, E, of cover glass is calculated by:

$$E = F^2 / (2 \times K); \text{ so } E(K1) = \text{Energy}_{total} \times K2 / (K1 + K2) = 152 \times K2 / (K1 + K2);$$

$$E(K1) < Ec(k1); \text{ So } K1 > (152 / \text{Energy}(K1 \text{ break}) - 1) \times K2$$

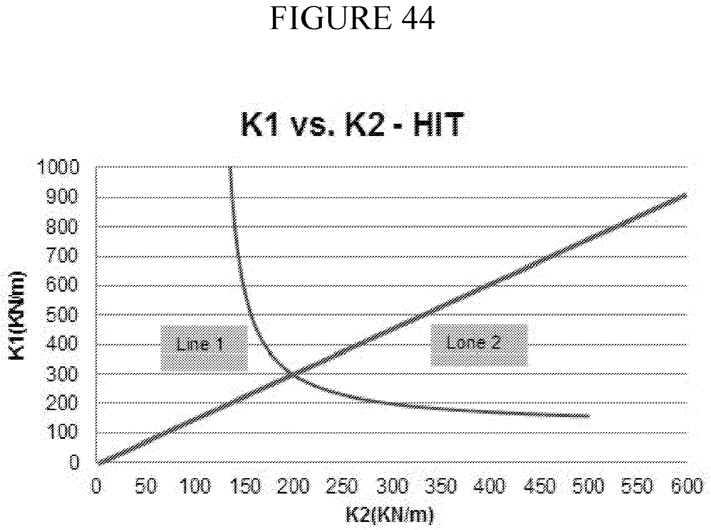

This correlation is represented by the red line in Figure 44 (Line 2). When K1 and K2 have values above the red line, there will be no cover glass breakage.

A third limitation is that the maximum deceleration no bigger than 120 g. Therefore,

$$\text{Energy}_{total} = F^2_{max} / (2 \times K_s) = 152 \text{ J};$$

Deceleration $_{max}$ < 120 g;
Ks < (120 × g × mass)$^2$/ (2 × 152) = 210.35 KN/m (Panel mass not included)
Ks < (120 × g × mass)$^2$/ (2 × 152) = 280.47 KN/m (Panel mass equal 1.0kg)

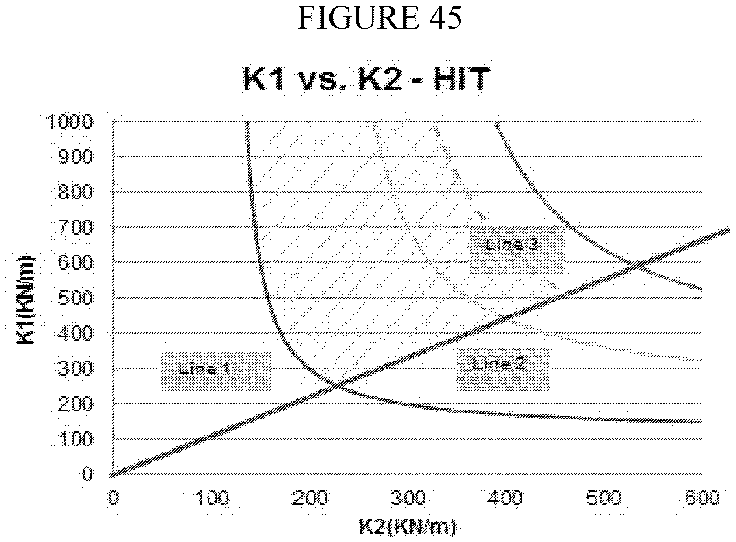

In order to meet the third limitation, K1 and K2 correlation is drawn in Figure 45 for panel mass = 0 or panel mass = 1 kg. In general, panel mass is between 0 and 1 kg, so it is expected K1 and K2 correlation stays below the dashed line (Line 3) in Figure 45 to meet the third limitation.

Combining all three limitations, the shaded (via slanted lines) area in Figure 45 highlights the acceptable range of module stiffness (K1) and mounting brackets stiffness (K2). A similar approach could be utilized for other product designs. In general, such a method could prove very useful in the initial product design interations.

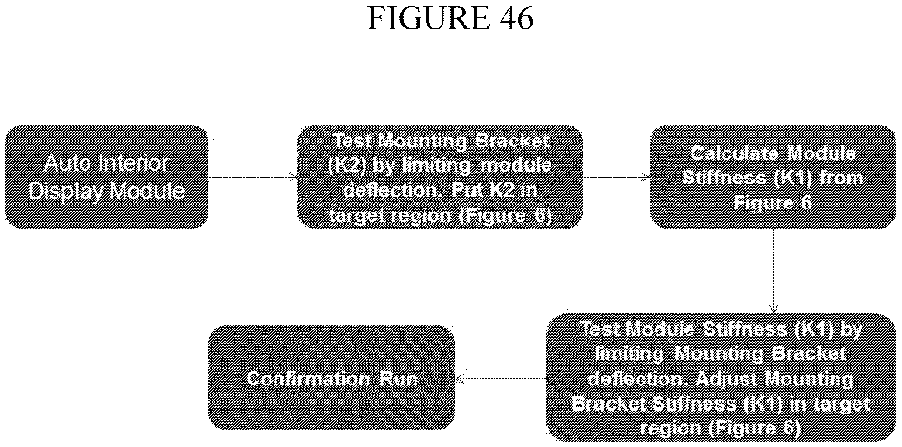

Figure 46 is a flowchart showing the above method to design a module assembly to meet the HIT requirements. The steps include testing a mounting bracket by limiting the module deflection to find K2. K2 can then be input into graph showing the target region in Figure 45. The next step is to calculate module stiffness K1 from Figure 45. The module stiffness K1 can be tested by limiting the mounting bracket deflection. In this case, the mounting bracket stiffness can be adjusted in the target region of Figure 45. A confirmation test can also be run to confirm the results achieved by this method.

Another aspect of one or more embodiments presented herein is a vehicle interior system designed to pass the HIT. Such a vehicle interior system can be used for dashboards, instrument panels, cockpits, central instrument cluster, heads up display (HUD), rear seat entertainment systems (RSE's) and other related surfaces in automotive or vehicle interiors. The system includes 3D cold formed glass and a housing assembly. In one or more embodiments, the cover glass can be an alkali-aluminosilicate glass composition that has been chemically ion-exchanged to achieve a compressive stress greater than 700 MPa and depth of layer greater than 35 μm. The cover glass is cold bent to a radius of about 100 mm and integrated into the housing assembly to form a cold form module that passes all the required safety tests for automotive interiors.

*Headform Impact Test Examples*

The following is an example for illustrative purposes. Figures 7A-7C show a setup of samples of such a module in the HIT for flat, convex and concave cases. The test was performed on the samples to assess the safety of Corning Gorilla® glass in automotive interiors. The glass samples' size was 3.1 inches × 6.7 inches × 0.027 inches (0.7 mm). The glass samples were attached to a plate (Acetal Delrin or Aluminum 6061) using VHB structural tape (3M VHB 4952). The plate represented a surrogate display module, and stiffness of the plate was varied by changing its thickness. The stiffness of the plates for each case is provided in Table 2. The base plate with the glass was attached to the energy absorbing mounting brackets (C-clamps) (material SS304). The mounting brackets are attached to each of the shorter side of the plate as shown in Figure 1. Again, the stiffness of the mounting brackets were varied by changing its thickness and are provided in Table 2. The C-clamps with plate and laminated cover glass represents a module assembly in a vehicle interior. The surrogate assembly (C-clamps, plate, and laminated glass) was then mounted on the HIT equipment such that the angle of impact is normal to the glass surface (90 degrees). For each experiment, real-time deceleration data and high speed video were recorded. The 3-ms deceleration, peak deceleration, and intrusion were reported. Intrusion (or deflection) was calculated by integrating twice the deceleration-time data (first integral provides velocity - time, and second integral provides intrusion - time).

| Example | Configuration | Module Config. | Module Stiffness | Mounting Clamp Cong. | Mounting Clamp Stiffness | 3-ms deceleration | Peak deceleration | Intrusion (mm) | Glass after test |
|---|---|---|---|---|---|---|---|---|---|
| 1 | Flat | 0.19" Delrin plate | 58 | 0.078" C-clamp | 63 | 21.0 g | 53.9 g | 138.2 | No fracture |
| 2 | Flat | 0.31" Delrin plate | 256 | 0.078" C-clamp | 63 | 32.9 g | 56.4 g | 131.9 | No fracture |
| 3 | Flat | 0.19" Delrin plate | 58 | 0.12" C-clamp | 258 | 70.8 g | 72.7 g | 53.5 | No fracture |
| 4 | Flat | 0.25" Delrin plate | 134 | 0.12" C-clamp | 258 | 66.8 g | 72.0 g | 53.3 | No fracture |
| 5 | Flat | 0.31" Delrin plate | 256 | 0.12" C-clamp | 258 | 72.5 g | 81.1 g | 45.0 | No fracture |
| 6 | Flat | 0.50" Delrin plate | 1070 | 0.12" C-clamp | 258 | 51.5 g | 113.1 g | 44.0 | No fracture |
| 7 | Flat | 0.19" Delrin plate | 58 | 0.187" C-clamp | 864 | 107.0 g | 116.1 g | 45.8 | No fracture |
| 8 | Flat | 0.25" Delrin plate | 134 | 0.187" C-clamp | 864 | 99.1 g | 109.7 g | 38.7 | No fracture |
| 9 | Flat | 0.31" Delrin plate | 256 | 0.187" C-clamp | 864 | 105.4 g | 112.4 g | 34.3 | No fracture |
| 10 | Flat | 0.125" Al plate | 128 | 0.12" C-clamp | 258 | 63.9 g | 67.3 g | 50.9 | No fracture |
| 11 | R100 Concave | 0.125" Al plate | 128 | 0.12" C-clamp | 258 | 49.0 g | 73.6 g | 56.4 | No fracture |
| 12 | R200 Convex | 0.125" Al plate | 128 | 0.12" C-clamp | 258 | 46.8 g | 53.9 g | 61.6 | No fracture |

Table 2: Headform impact test results for range of stiffness's of mounting clamps and module. Gorilla®

glass (thickness 0.7 mm) is laminated on module using VHB tape (3M VHB 4952)

*Examples 1-9:* Headform impact test was performed using a range of stiffness for the Delrin plate (display module) and mounting brackets. The stiffness of the display module was varied in range of 58 kN/m to 1070 kN/m. The mounting bracket stiffness was varied in range of 63 kN/m to 864 kN/m. The data (3-ms deceleration, peak deceleration and intrusion) for several combinations in this range is presented in Table 2. For the stiffest mounting brackets (0.19" C-clamps, 864 kN/m), the 3-ms deceleration was higher than 80 g. The peak deceleration meets the specification of less than 120 g. The intrusion was between 34 and 46 mm. Consequently, these configurations were outside the operating window in the headform impact test. The Gorilla® glass (0.7 mm) did not break for any of the experiments.

For the medium stiffness mounting brackets (0.12" C-clamps, 258 kN/m), the 3-ms deceleration was in range of 51 g to 73 g and lower than 80 g specification. The peak deceleration for each of the cases were less than 120 g specification. Additionally, the intrusion was between 44 mm to 54 mm. Consequently, these configurations were inside the operating window for headform impact test. The Gorilla® glass did not break for any of the experiments.

For the low stiffness mounting brackets (0.08" C-clamps, 63 kN/m), the 3-ms deceleration was in range of 21 g to 33 g and lower than 80 g specification. The peak deceleration for each of the cases was less than 120 g specification. Additionally, the intrusion was between 131 mm to 139 mm. Although, these configurations were within the operating window for headform impact test, the intrusion values were high. The Gorilla® glass did not break for any of the experiments.

Examples 1-9 also show that the mounting bracket stiffness affects the 3-ms deceleration and plate (display module) stiffness affects the peak deceleration.

*Examples 10-12:* These examples utilize Aluminum 6061 plate as a surrogate for display module instead of Delrin plate. A 0.12" thick Aluminum plate had a stiffness of 128 kN/m, which was similar to 0.25" Delrin plate (stiffness 134 kN/m). The mounting bracket stiffness was fixed at 258 kN/m (0.12" C-clamps). For each of these experiments 0.7 mm thick Gorilla® glass was utilized. For the flat plate configuration (Example 10), the 3-ms deceleration, peak deceleration, and intrusion were 63.9 g, 67.3 g, and 50.9 mm, respectively. These values were similar to that obtained in Example # 4. Examples 11 and 12 use a configuration similar to Example 10, but with a curved configuration (R100 concave - Example 11, R200 Convex - Example 12). For each of these examples, the 3-ms deceleration and peak deceleration was less than 80 g, and less than 120 g, respectively. For the R100 concave, the intrusion was 56.4 mm, and for R200 convex, the intrusion was 61.6 mm. Consequently, all these configurations were inside the operating window for headform impact test. The Gorilla® glass did not break for any of the experiments.

*Laceration Test Examples*

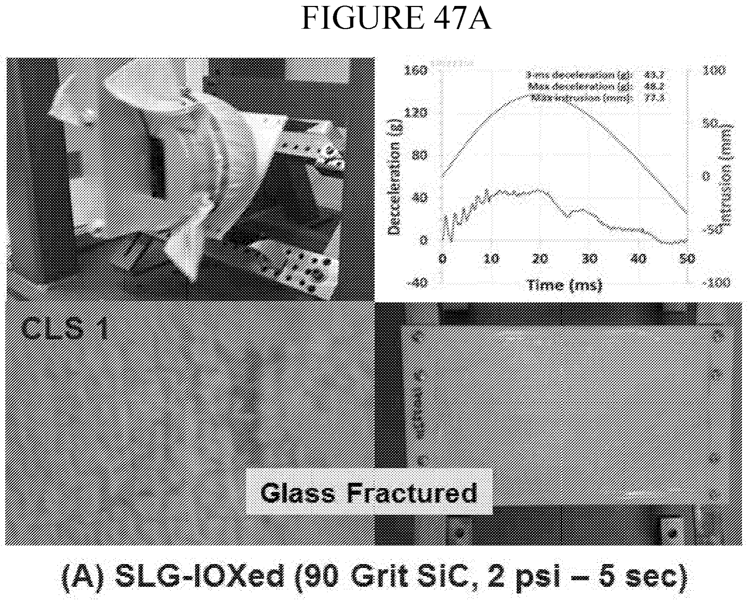

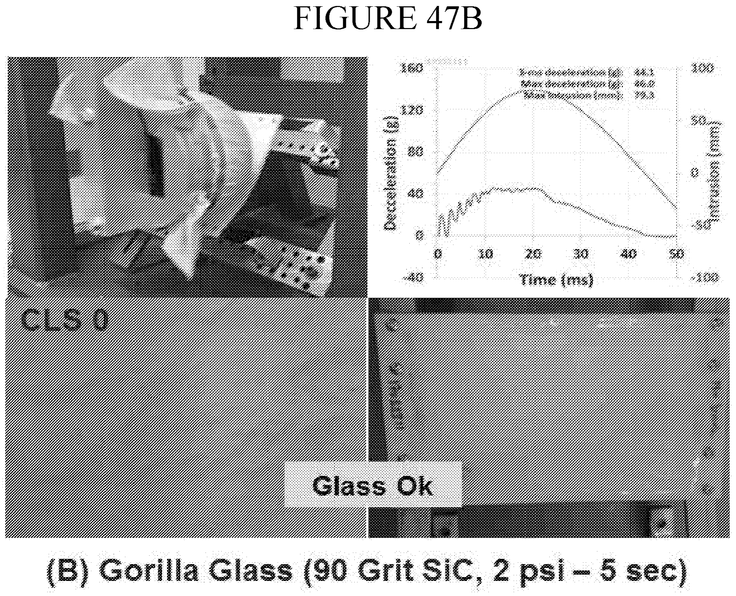

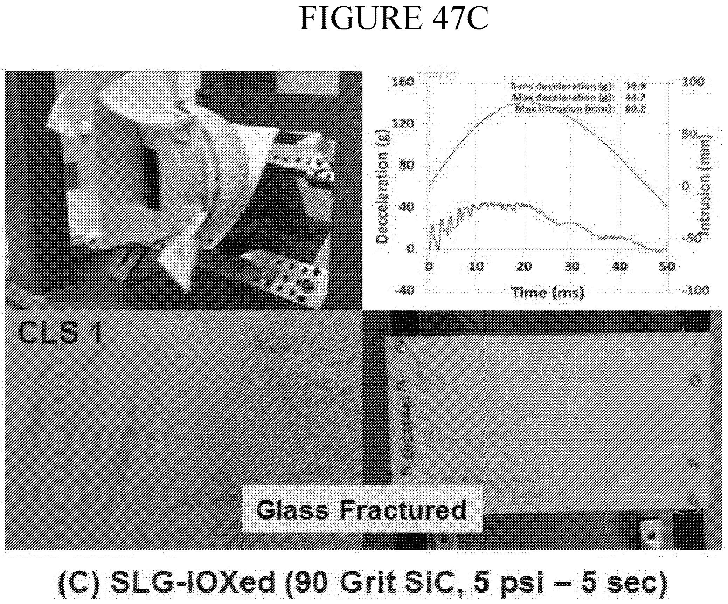

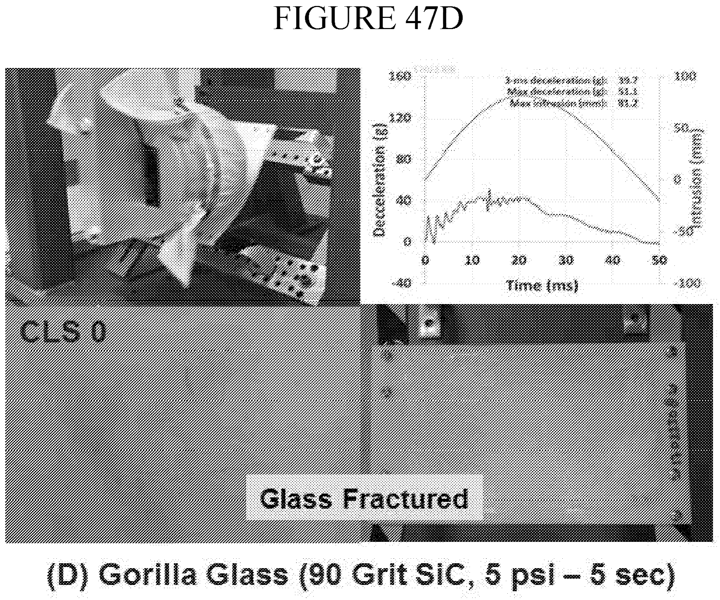

Figure 8 shows the headform impact test setup for the laceration test. The test was performed to assess the safety of Corning Gorilla® glass in comparison to ion-exchanged soda-lime glass (SLG-IOXed). The glass samples size was 3.1" × 6.7" × 0.043" (1.1mm thick). To assess the laceration characteristics of the glass, it was important that the glass fracture doing the test. Therefore, Surface 2 was abraded with SiC particles to initiate fracture. Two different abrasion conditions were utilized for the samples (2 psi - 5 sec, and 5 psi - 5 sec). The glass samples were attached to Acetal Delrin plate (4.2" × 7.7" × 0.25", stiffness 134 kN/mm) utilizing 125 um E3 Display Liquid Optically Clear Adhesive (LOCA). The Acetal Delrin plate with the glass was attached to the energy absorbing C-clamps (material SS304, stiffness 258 kN/m). The C-clamps with Delrin plate and laminated cover glass is believed to represent a module assembly in a vehicle interior. The surrogate assembly (C-clamps, Delrin plate, and laminated glass) was then mounted on the HIT equipment such that the angle of impact is 45 degrees. The head (impactor) was wrapped in a double layer synthetic chamois skin (PFA fabric 17" × 27" from McMaster). For each experiment, high speed video (picture), deceleration data, synthetic chamois skin condition after test and glass sample condition after test was recorded (Figures 47A-47D). Table 3 shows a "Chamois Laceration Scale" (CLS) for rating the pieces of chamois shown in Figures 47A-47D.

Table 3: Chamois Laceration Scale

| Damage of outer and inner chamois | CLS | Acceptance |
|---|---|---|
| Outer superficial; inner intact | 0 | Pass |
| Outer cuts and punctures; inner superficial | 1 | Pass |
| Outer and inner cuts and punctures | 2 | Fail |
| Outer gashes, cuts and punctures; inner cuts and punctures | 3 | Fail |
| Outer and inner gashes, cuts an punctures | 4 | Fail |
| Outer and inner shredded | 5 | Fail |

*Comparative Example 13, SLG-IOXed (90 Grit SiC, 2 psi - 5 sec):* Headfrom impact test was performed using the setup described above. The 3-ms deceleration, maximum deceleration, and intrusion were 43.7 g, 48.2 g, 77.3 mm, respectively. The cover glass fractured during the test, and punctured the outer layer of the synthetic chamois skin (CLS 1).
*Example 14, Gorilla Glass (90 Grit SiC, 2 psi - 5 sec):* Headfrom impact test was performed using the setup described above. The 3-ms deceleration, maximum deceleration, and intrusion were 44.1 g, 46.0 g, 79.3 mm, respectively. The cover glass did not fracture during the test, and only superficial damage observed on the outer layer of the synthetic chamois skin (CLS 0).
*Comparative Example 15, SLG-IOXed (90 Grit SiC, 5 psi - 5 sec):* Headfrom impact test was performed using the setup described above. The 3-ms deceleration, maximum deceleration, and intrusion were 39.9 g, 44.7 g, 80.2 mm, respectively. The cover glass fractured during the test, and punctured the outer layer of the synthetic chamois skin (CLS 1).
*Example 16, Gorilla Glass (90 Grit SiC, 5 psi - 5 sec):* Headfrom impact test was performed using the setup described above. The 3-ms deceleration, maximum deceleration, and intrusion were 39.7 g, 51.1 g, 81.2 mm, respectively. The cover glass fractured during the test into very small pieces compared to SLG-IOXed. Consequently, due to small pieces, only superficial damage was observed on the outer layer of the synthetic chamois skin (CLS 0).

*Glass Shards Examples*

Glass shard testing was performed to assess the safety of Corning Gorilla® glass with different thickness and adhesives. The glass samples size was 3.1" × 6.7", and thickness ranged from 1.1 mm to 0.4 mm. It is noted that Gorilla® glass do not break during the headform impact test. However, to study the effect of glass breakage during catastrophic event, it was important to make the glass fracture during the test. A 150 Grit Garnet abrasion (1 kg load, 1" scratch, 1 pass) was utilized to introduce a 11 um deep flaw on surface B of the samples. The glass samples were attached to Acetal Delrin plate (4.2" × 7.7" × 0.25", stiffness 134 kN/mm) utilizing 125 um E3 Display Liquid Optically Clear Adhesive (LOCA) and 3M VHB 4952 structural adhesive. The Acetal Delrin plate with the glass was attached to the energy absorbing C-clamps (material SS304, stiffness 258 kN/m). The C-clamps with Delrin plate and laminated cover glass is believed to represent a module assembly in a vehicle interior. The surrogate assembly (C-clamps, Delrin plate, and laminated glass) was then mounted on the HIT equipment such that the angle of impact is 90 degrees. For each experiment, the samples were weighed before and after the test. The difference (weight before minus weight after) was accounted to the loss of glass shards during the HIT, and is reported as percentage.

*Examples 17-20, Gorilla*®* glass 1.1 mm to 0.4 mm - E3 Display LOCA (125 um):* The quantities of shards for each thickness was 16.4% (1.1 mm), 7.3% (0.7 mm), 2.9% (0.55 mm), and 0.7% (0.4 mm). The example showcases the effect of thickness of glass on quantity of shard generation. Lower thickness generated lower quantities of glass shard during catastrophic failure.

*Examples 21 - 24, Gorilla*®* glass 1.1 mm to 0.4 mm - 3M VHB 4952 (1.1 mm):* The quantities of shards for each thickness was 7.3% (1.1 mm), 3.7% (0.7 mm), 1.5% (0.55 mm), and 1.1% (0.4 mm). These examples showcase the effect of thickness of glass on quantity of shard generation. Lower thickness generated lower quantities of glass shard during catastrophic failure. Additionally, these examples may be compared to above and shows the effect of retention nature of the adhesives. 3M VHB has a higher retention of glass shards (higher modulus) compared to E3 Display LOCA (lower modulus). The above experiments were for example only.

As used herein, the term "dispose" includes coating, depositing and/or forming a material onto a surface using any known method in the art. The disposed material may constitute a layer, as defined herein. As used herein, the phrase "disposed on" includes the instance of forming a material onto a surface such that the material is in direct contact with the surface and also includes the instance where the material is formed on a surface, with one or more intervening material(s) is between the disposed material and the surface. The intervening material(s) may constitute a layer, as defined herein. The term "layer" may include a single layer or may include one or more sub-layers. Such sub-layers may be in direct contact with one another. The sub-layers may be formed from the same material or two or more different materials. In one or more alternative embodiments, such sub-layers may have intervening layers of different materials disposed therebetween. In one or more embodiments a layer may include one or more contiguous and uninterrupted layers and/or one or more discontinuous and interrupted layers (i.e., a layer having different materials formed adjacent to one another). A layer or sub-layers may be formed by any known method in the art, including discrete deposition or continuous deposition processes. In one or more embodiments, the layer may be formed using only continuous deposition processes, or, alternatively, only discrete deposition processes.

In one or more embodiments, the glass substrate has a thickness (t) that is about 1.5 mm or less. For example, the thickness may be in a range from about 0.1 mm to about 1.5 mm, from about 0.15 mm to about 1.5 mm, from about 0.2 mm to about 1.5 mm, from about 0.25 mm to about 1.5 mm, from about 0.3 mm to about 1.5 mm, from about 0.35 mm to about 1.5 mm, from about 0.4 mm to about 1.5 mm, from about 0.45 mm to about 1.5 mm, from about 0.5 mm to about 1.5 mm, from about 0.55 mm to about 1.5 mm, from about 0.6 mm to about 1.5 mm, from about 0.65 mm to about 1.5 mm, from about 0.7 mm to about 1.5 mm, from about 0.1 mm to about 1.4 mm, from about 0.1 mm to about 1.3 mm, from about 0.1 mm to about 1.2 mm, from about 0.1 mm to about 1.1 mm, from about 0.1 mm to about 1.05 mm, from about 0.1 mm to about 1 mm, from about 0.1 mm to about 0.95 mm, from about 0.1 mm to about 0.9 mm, from about 0.1 mm to about 0.85 mm, from about 0.1 mm to about 0.8 mm, from about 0.1 mm to about 0.75 mm, from about 0.1 mm to about 0.7 mm, from about 0.1 mm to about 0.65 mm, from about 0.1 mm to about 0.6 mm, from about 0.1 mm to about 0.55 mm, from about 0.1 mm to about 0.5 mm, from about 0.1 mm to about 0.4 mm, or from about 0.3 mm to about 0.7 mm.

In one or more embodiments, the glass substrate has a width (W) in a range from about 5 cm to about 250 cm, from about 10 cm to about 250 cm, from about 15 cm to about 250 cm, from about 20 cm to about 250 cm, from about 25 cm to about 250 cm, from about 30 cm to about 250 cm, from about 35 cm to about 250 cm, from about 40 cm to about 250 cm, from about 45 cm to about 250 cm, from about 50 cm to about 250 cm, from about 55 cm to about 250 cm, from about 60 cm to about 250 cm, from about 65 cm to about 250 cm, from about 70 cm to about 250 cm, from about 75 cm to about 250 cm, from about 80 cm to about 250 cm, from about 85 cm to about 250 cm, from about 90 cm to about 250 cm, from about 95 cm to about 250 cm, from about 100 cm to about 250 cm, from about 110 cm to about 250 cm, from about 120 cm to about 250 cm, from about 130 cm to about 250 cm, from about 140 cm to about 250 cm, from about 150 cm to about 250 cm, from about 5 cm to about 240 cm, from about 5 cm to about 230 cm, from about 5 cm to about 220 cm, from about 5 cm to about 210 cm, from about 5 cm to about 200 cm, from about 5 cm to about 190 cm, from about 5 cm to about 180 cm, from about 5 cm to about 170 cm, from about 5 cm to about 160 cm, from about 5 cm to about 150 cm, from about 5 cm to about 140 cm, from about 5 cm to about 130 cm, from about 5 cm to about 120 cm, from about 5 cm to about 110 cm, from about 5 cm to about 110 cm, from about 5 cm to about 100 cm, from about 5 cm to about 90 cm, from about 5 cm to about 80 cm, or from about 5 cm to about 75 cm.

In one or more embodiments, the glass substrate has a length (L) in a range from about 5 cm to about 250 cm, from about 10 cm to about 250 cm, from about 15 cm to about 250 cm, from about 20 cm to about 250 cm, from about 25 cm to about 250 cm, from about 30 cm to about 250 cm, from about 35 cm to about 250 cm, from about 40 cm to about 250 cm, from about 45 cm to about 250 cm, from about 50 cm to about 250 cm, from about 55 cm to about 250 cm, from about 60 cm to about 250 cm, from about 65 cm to about 250 cm, from about 70 cm to about 250 cm, from about 75 cm to about 250 cm, from about 80 cm to about 250 cm, from about 85 cm to about 250 cm, from about 90 cm to about 250 cm, from about 95 cm to about 250 cm, from about 100 cm to about 250 cm, from about 110 cm to about 250 cm, from about 120 cm to about 250 cm, from about 130 cm to about 250 cm, from about 140 cm to about 250 cm, from about 150 cm to about 250 cm, from about 5 cm to about 240 cm, from about 5 cm to about 230 cm, from about 5 cm to about 220 cm, from about 5 cm to about 210 cm, from about 5 cm to about 200 cm, from about 5 cm to about 190 cm, from about 5 cm to about 180 cm, from about 5 cm to about 170 cm, from about 5 cm to about 160 cm, from about 5 cm to about 150 cm, from about 5 cm to about 140 cm, from about 5 cm to about 130 cm, from about 5 cm to about 120 cm, from about 5 cm to about 110 cm, from about 5 cm to about 110 cm, from about 5 cm to about 100 cm, from about 5 cm to about 90 cm, from about 5 cm to about 80 cm, or from about 5 cm to about 75 cm.

In one or more embodiments, the glass substrate may be strengthened. In one or more embodiments, the glass substrate may be strengthened to include compressive stress that extends from a surface to a depth of compression (DOC). The compressive stress regions are balanced by a central portion exhibiting a tensile stress. At the DOC, the stress crosses from a positive (compressive) stress to a negative (tensile) stress.

In one or more embodiments, the glass substrate may be strengthened mechanically by utilizing a mismatch of the coefficient of thermal expansion between portions of the article to create a compressive stress region and a central region exhibiting a tensile stress. In some embodiments, the glass substrate may be strengthened thermally by heating the glass to a temperature above the glass transition point and then rapidly quenching.

In one or more embodiments, the glass substrate may be chemically strengthening by ion exchange. In the ion exchange process, ions at or near the surface of the glass substrate are replaced by - or exchanged with - larger ions having the same valence or oxidation state. In those embodiments in which the glass substrate comprises an alkali aluminosilicate glass, ions in the surface layer of the article and the larger ions are monovalent alkali metal cations, such as $Li^+$, $Na^+$, $K^+$, $Rb^+$, and $Cs^+$. Alternatively, monovalent cations in the surface layer may be replaced with monovalent cations other than alkali metal cations, such as $Ag^+$ or the like. In such embodiments, the monovalent ions (or cations) exchanged into the glass substrate generate a stress.

Ion exchange processes are typically carried out by immersing a glass substrate in a molten salt bath (or two or more molten salt baths) containing the larger ions to be exchanged with the smaller ions in the glass substrate. It should be noted that aqueous salt baths may also be utilized. In addition, the composition of the bath(s) may include more than one type of larger ion (e.g., Na+ and K+) or a single larger ion. It will be appreciated by those skilled in the art that parameters for the ion exchange process, including, but not limited to, bath composition and temperature, immersion time, the number of immersions of the glass substrate in a salt bath (or baths), use of multiple salt baths, additional steps such as annealing, washing, and the like, are generally determined by the composition of the glass substrate (including the structure of the article and any crystalline phases present) and the desired DOC and CS of the glass substrate that results from strengthening. Exemplary molten bath composition may include nitrates, sulfates, and chlorides of the larger alkali metal ion. Typical nitrates include $KNO_3$, $NaNO_3$, $LiNO_3$, $NaSO_4$ and combinations thereof. The temperature of the molten salt bath typically is in a range from about 380°C up to about 450°C, while immersion times range from about 15 minutes up to about 100 hours depending on glass substrate thickness, bath temperature and glass (or monovalent ion) diffusivity. However, temperatures and immersion times different from those described above may also be used.

In one or more embodiments, the glass substrates may be immersed in a molten salt bath of 100% $NaNO_3$, 100% $KNO_3$, or a combination of $NaNO_3$ and $KNO_3$ having a temperature from about 370 °C to about 480 °C. In some embodiments, the glass substrate may be immersed in a molten mixed salt bath including from about 5% to about 90% $KNO_3$ and from about 10% to about 95% $NaNO_3$. In one or more embodiments, the glass substrate may be immersed in a second bath, after immersion in a first bath. The first and second baths may have different compositions and/or temperatures from one another. The immersion times in the first and second baths may vary. For example, immersion in the first bath may be longer than the immersion in the second bath.

In one or more embodiments, the glass substrate may be immersed in a molten, mixed salt bath including $NaNO_3$ and $KNO_3$ (e.g., 49%/51%, 50%/50%, 51%/49%) having a temperature less than about 420 °C (e.g., about 400 °C or about 380 °C) for less than about 5 hours, or even about 4 hours or less.

Ion exchange conditions can be tailored to provide a "spike" or to increase the slope of the stress profile at or near the surface of the resulting glass substrate. The spike may result in a greater surface CS value. This spike can be achieved by single bath or multiple baths, with the bath(s) having a single composition or mixed composition, due to the unique properties of the glass compositions used in the glass substrates described herein.

In one or more embodiments, where more than one monovalent ion is exchanged into the glass substrate, the different monovalent ions may exchange to different depths within the glass substrate (and generate different magnitudes stresses within the glass substrate at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method. As used herein CS may be the "maximum compressive stress" which is the highest compressive stress value measured within the compressive stress layer. In some embodiments, the maximum compressive stress is located at the surface of the glass substrate. In other embodiments, the maximum compressive stress may occur at a depth below the surface, giving the compressive profile the appearance of a "buried peak."

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass substrate is chemically strengthened by an ion exchange treatment, FSM or SCALP may be used depending on which ion is exchanged into the glass substrate. Where the stress in the glass substrate is generated by exchanging potassium ions into the glass substrate, FSM is used to measure DOC. Where the stress is generated by exchanging sodium ions into the glass substrate, SCALP is used to measure DOC. Where the stress in the glass substrate is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass substrates is measured by FSM. Central tension or CT is the maximum tensile stress and is measured by SCALP.

In one or more embodiments, the glass substrate maybe strengthened to exhibit a DOC that is described a fraction of the thickness t of the glass substrate (as described herein). For example, in one or more embodiments, the DOC may be equal to or greater than about 0.05t, equal to or greater than about 0.1t, equal to or greater than about 0.11t, equal to or greater than about 0.12t, equal to or greater than about 0.13t, equal to or greater than about 0.14t, equal to or greater than about 0.15t, equal to or greater than about 0.16t, equal to or greater than about 0.17t, equal to or greater than about 0.18t, equal to or greater than about 0.19t, equal to or greater than about 0.2t, equal to or greater than about 0.21t. In some embodiments, The DOC may be in a range from about 0.08t to about 0.25t, from about 0.09t to about 0.25t, from about 0.18t to about 0.25t, from about 0.11t to about 0.25t, from about 0.12t to about 0.25t, from about 0.13t to about 0.25t, from about 0.14t to about 0.25t, from about 0.15t to about 0.25t, from about 0.08t to about 0.24t, from about 0.08t to about 0.23t, from about 0.08t to about 0.22t, from about 0.08t to about 0.21t, from about 0.08t to about 0.2t, from about 0.08t to about 0.19t, from about 0.08t to about 0.18t, from about 0.08t to about 0.17t, from about 0.08t to about 0.16t, or from about 0.08t to about 0.15t. In some instances, the DOC may be about 20 $\mu$m or less. In one or more embodiments, the DOC may be about 40 $\mu$m or greater (e.g., from about 40 $\mu$m to about 300 $\mu$m, from about 50 $\mu$m to about 300 $\mu$m, from about 60 $\mu$m to about 300 $\mu$m, from about 70 $\mu$m to about 300 $\mu$m, from about 80 $\mu$m to about 300 $\mu$m, from about 90 $\mu$m to about 300 $\mu$m, from about 100 $\mu$m to about 300 $\mu$m, from about 110 $\mu$m to about 300 $\mu$m, from about 120 $\mu$m to about 300 $\mu$m, from about 140 $\mu$m to about 300 $\mu$m, from about 150 $\mu$m to about 300 $\mu$m, from about 40 $\mu$m to about 290 $\mu$m, from about 40 $\mu$m to about 280 $\mu$m, from about 40 $\mu$m to about 260 $\mu$m, from about 40 $\mu$m to about 250 $\mu$m, from about 40 $\mu$m to about 240 $\mu$m, from about 40 $\mu$m to about 230 $\mu$m, from about 40 $\mu$m to about 220 $\mu$m, from about 40 $\mu$m to about 210 $\mu$m, from about 40 $\mu$m to about 200 $\mu$m, from about 40 $\mu$m to about 180 $\mu$m, from about 40 $\mu$m to about 160 $\mu$m, from about 40 $\mu$m to about 150 $\mu$m, from about 40 $\mu$m to about 140 $\mu$m, from about 40 $\mu$m to about 130 $\mu$m, from about 40 $\mu$m to about 120 $\mu$m, from about 40 $\mu$m to about 110 $\mu$m, or from about 40 $\mu$m to about 100 $\mu$m.

In one or more embodiments, the strengthened glass substrate may have a CS (which may be found at the surface or a depth within the glass substrate) of about 200 MPa or greater, 300 MPa or greater, 400 MPa or greater, about 500 MPa or greater, about 600 MPa or greater, about 700 MPa or greater, about 800 MPa or greater, about 900 MPa or greater, about 930 MPa or greater, about 1000 MPa or greater, or about 1050 MPa or greater.

In one or more embodiments, the strengthened glass substrate may have a maximum tensile stress or central tension (CT) of about 20 MPa or greater, about 30 MPa or greater, about 40 MPa or greater, about 45 MPa or greater, about 50 MPa or greater, about 60 MPa or greater, about 70 MPa or greater, about 75 MPa or greater, about 80 MPa or greater, or about 85 MPa or greater. In some embodiments, the maximum tensile stress or central tension (CT) may be in a range from about 40 MPa to about 100 MPa.

Suitable glass compositions for use in the glass substrate include soda lime glass, aluminosilicate glass, borosilicate glass, boroaluminosilicate glass, alkali-containing aluminosilicate glass, alkali-containing borosilicate glass, and alkali-containing boroaluminosilicate glass.

Unless otherwise specified, the glass compositions disclosed herein are described in mole percent (mol%) as analyzed on an oxide basis.

In one or more embodiments, the glass composition may include $SiO_2$ in an amount in a range from about 66 mol% to about 80 mol%, from about 67 mol% to about 80 mol%, from about 68 mol% to about 80 mol%, from about 69 mol% to about 80 mol%, from about 70 mol% to about 80 mol%, from about 72 mol% to about 80 mol%, from about 65 mol% to about 78 mol%, from about 65 mol% to about 76 mol%, from about 65 mol% to about 75 mol%, from about 65 mol% to about 74 mol%, from about 65 mol% to about 72 mol%, or from about 65 mol% to about 70 mol%, and all ranges and sub-ranges therebetween.

In one or more embodiments, the glass composition includes $Al_2O_3$ in an amount greater than about 4 mol%, or greater than about 5 mol%. In one or more embodiments, the glass composition includes $Al_2O_3$ in a range from greater than about 7 mol% to about 15 mol%, from greater than about 7 mol% to about 14 mol%, from about 7 mol% to about 13 mol%, from about 4 mol% to about 12 mol%, from about 7 mol% to about 11 mol%, from about 8 mol% to about 15 mol%, from 9 mol% to about 15 mol%, from about 9 mol% to about 15 mol%, from about 10 mol% to about 15 mol%, from about 11 mol% to about 15 mol%, or from about 12 mol% to about 15 mol%, and all ranges and sub-ranges therebetween. In one or more embodiments, the upper limit of $Al_2O_3$ may be about 14 mol%, 14.2 mol%, 14.4 mol%, 14.6 mol%, or 14.8 mol%.

In one or more embodiments, the glass article is described as an aluminosilicate glass article or including an aluminosilicate glass composition. In such embodiments, the glass composition or article formed therefrom includes $SiO_2$ and $Al_2O_3$ and is not a soda lime silicate glass. In this regard, the glass composition or article formed therefrom includes $Al_2O_3$ in an amount of about 2 mol% or greater, 2.25 mol% or greater, 2.5 mol% or greater, about 2.75 mol% or greater, about 3 mol% or greater.

In one or more embodiments, the glass composition comprises $B_2O_3$ (e.g., about 0.01 mol% or greater). In one or more embodiments, the glass composition comprises $B_2O_3$ in an amount in a range from about 0 mol% to about 5 mol%, from about 0 mol% to about 4 mol%, from about 0 mol% to about 3 mol%, from about 0 mol% to about 2 mol%, from about 0 mol% to about 1 mol%, from about 0 mol% to about 0.5 mol%, from about 0.1 mol% to about 5 mol%, from about 0.1 mol% to about 4 mol%, from about 0.1 mol% to about 3 mol%, from about 0.1 mol% to about 2 mol%, from about 0.1 mol% to about 1 mol%, from about 0.1 mol% to about 0.5 mol%, and all ranges and sub-ranges therebetween. In one or more embodiments, the glass composition is substantially free of $B_2O_3$.

As used herein, the phrase "substantially free" with respect to the components of the composition means that the component is not actively or intentionally added to the composition during initial batching, but may be present as an impurity in an amount less than about 0.001 mol%.

In one or more embodiments, the glass composition optionally comprises $P_2O_5$ (e.g., about 0.01 mol% or greater). In one or more embodiments, the glass composition comprises a non-zero amount of $P_2O_5$ up to and including 2 mol%, 1.5 mol%, 1 mol%, or 0.5 mol%. In one or more embodiments, the glass composition is substantially free of $P_2O_5$.

In one or more embodiments, the glass composition may include a total amount of $R_2O$ (which is the total amount of alkali metal oxide such as $Li_2O$, $Na_2O$, $K_2O$, $Rb_2O$, and $Cs_2O$) that is greater than or equal to about 8 mol%, greater than or equal to about 10 mol%, or greater than or equal to about 12 mol%. In some embodiments, the glass composition includes a total amount of $R_2O$ in a range from about 8 mol% to about 20 mol%, from about 8 mol% to about 18 mol%, from about 8 mol% to about 16 mol%, from about 8 mol% to about 14 mol%, from about 8 mol% to about 12 mol%, from about 9 mol% to about 20 mol%, from about 10 mol% to about 20 mol%, from about 11 mol% to about 20 mol%, from about 12 mol% to about 20 mol%, from about 13 mol% to about 20 mol%, from about 10 mol% to about 14 mol%, or from 11 mol% to about 13 mol%, and all ranges and sub-ranges therebetween. In one or more embodiments, the glass composition may be substantially free of $Rb_2O$, $Cs_2O$ or both $Rb_2O$ and $Cs_2O$. In one or more embodiments, the $R_2O$ may include the total amount of $Li_2O$, $Na_2O$ and $K_2O$ only. In one or more embodiments, the glass composition may comprise at least one alkali metal oxide selected from $Li_2O$, $Na_2O$ and $K_2O$, wherein the alkali metal oxide is present in an amount greater than about 8 mol% or greater.

In one or more embodiments, the glass composition comprises $Na_2O$ in an amount greater than or equal to about 8 mol%, greater than or equal to about 10 mol%, or greater than or equal to about 12 mol%. In one or more embodiments, the composition includes $Na_2O$ in a range from about from about 8 mol% to about 20 mol%, from about 8 mol% to about 18 mol%, from about 8 mol% to about 16 mol%, from about 8 mol% to about 14 mol%, from about 8 mol% to about 12 mol%, from about 9 mol% to about 20 mol%, from about 10 mol% to about 20 mol%, from about 11 mol% to about 20 mol%, from about 12 mol% to about 20 mol%, from about 13 mol% to about 20 mol%, from about 10 mol% to about 14 mol%, or from 11 mol% to about 16 mol%, and all ranges and sub-ranges therebetween.

In one or more embodiments, the glass composition includes less than about 4 mol% $K_2O$, less than about 3 mol% $K_2O$, or less than about 1 mol% $K_2O$. In some instances, the glass composition may include $K_2O$ in an amount in a range from about 0 mol% to about 4 mol%, from about 0 mol% to about 3.5 mol%, from about 0 mol% to about 3 mol%, from about 0 mol% to about 2.5 mol%, from about 0 mol% to about 2 mol%, from about 0 mol% to about 1.5 mol%, from about 0 mol% to about 1 mol%, from about 0 mol% to about 0.5 mol%, from about 0 mol% to about 0.2 mol%, from about 0 mol% to about 0.1 mol%, from about 0.5 mol% to about 4 mol%, from about 0.5 mol% to about 3.5 mol%, from about 0.5 mol% to about 3 mol%, from about 0.5 mol% to about 2.5 mol%, from about 0.5 mol% to about 2 mol%, from about 0.5 mol% to about 1.5 mol%, or from about 0.5 mol% to about 1 mol%, and all ranges and sub-ranges therebetween. In one or more embodiments, the glass composition may be substantially free of $K_2O$.

In one or more embodiments, the glass composition is substantially free of $Li_2O$. In one or more embodiments, the amount of $Na_2O$ in the composition may be greater than the amount of $Li_2O$. In some instances, the amount of $Na_2O$ may be greater than the combined amount of $Li_2O$ and $K_2O$. In one or more alternative embodiments, the amount of $Li_2O$ in the composition may be greater than the amount of $Na_2O$ or the combined amount of $Na_2O$ and $K_2O$.

In one or more embodiments, the glass composition may include a total amount of RO (which is the total amount of alkaline earth metal oxide such as CaO, MgO, BaO, ZnO and SrO) in a range from about 0 mol% to about 2 mol%. In some embodiments, the glass composition includes a non-zero amount of RO up to about 2 mol%. In one or more embodiments, the glass composition comprises RO in an amount from about 0 mol% to about 1.8 mol%, from about 0 mol% to about 1.6 mol%, from about 0 mol% to about 1.5 mol%, from about 0 mol% to about 1.4 mol%, from about 0 mol% to about 1.2 mol%, from about 0 mol% to about 1 mol%, from about 0 mol% to about 0.8 mol%, from about 0 mol% to about 0.5 mol%, and all ranges and sub-ranges therebetween.

In one or more embodiments, the glass composition includes CaO in an amount less than about 1 mol%, less than about 0.8 mol%, or less than about 0.5 mol%. In one or more embodiments, the glass composition is substantially free of CaO.

In some embodiments, the glass composition comprises MgO in an amount from about 0 mol% to about 7 mol%, from about 0 mol% to about 6 mol%, from about 0 mol% to about 5 mol%, from about 0 mol% to about 4 mol%, from about 0.1 mol% to about 7 mol%, from about 0.1 mol% to about 6 mol%, from about 0.1 mol% to about 5 mol%, from about 0.1 mol% to about 4 mol%, from about 1 mol% to about 7 mol%, from about 2 mol% to about 6 mol%, or from about 3 mol% to about 6 mol%, and all ranges and sub-ranges therebetween.

In one or more embodiments, the glass composition comprises $ZrO_2$ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises $ZrO_2$ in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

In one or more embodiments, the glass composition comprises $SnO_2$ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises SnO2 in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

In one or more embodiments, the glass composition may include an oxide that imparts a color or tint to the glass articles. In some embodiments, the glass composition includes an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

In one or more embodiments, the glass composition includes Fe expressed as $Fe_2O_3$, wherein Fe is present in an amount up to (and including) about 1 mol%. In some embodiments, the glass composition is substantially free of Fe. In one or more embodiments, the glass composition comprises $Fe_2O_3$ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises $Fe_2O_3$ in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

Where the glass composition includes $TiO_2$, $TiO_2$ may be present in an amount of about 5 mol% or less, about 2.5 mol% or less, about 2 mol% or less or about 1 mol% or less. In one or more embodiments, the glass composition may be substantially free of $TiO_2$.

An exemplary glass composition includes $SiO_2$ in an amount in a range from about 65 mol% to about 75 mol%, $Al_2O_3$ in an amount in a range from about 8 mol% to about 14 mol%, $Na_2O$ in an amount in a range from about 12 mol% to about 17 mol%, $K_2O$ in an amount in a range of about 0 mol% to about 0.2 mol%, and MgO in an amount in a range from about 1. 5 mol% to about 6 mol%. Optionally, $SnO_2$ may be included in the amounts otherwise disclosed herein.

Aspect (1) of the present disclosure pertains to a vehicle interior system comprising: a base comprising a curved surface; and a glass substrate comprising a first major surface, a second major surface, a minor surface connecting the first major surface and the second major surface, and a thickness in a range from 0.05 mm to 2 mm, wherein the second major surface comprises a first radius of curvature of 500 mm or greater, wherein, when an impacter having a mass of 6.8 kg impacts the first major surface at an impact velocity of 5.35 m/s to 6.69 m/s, the deceleration of the impacter is 120 g (g-force) or less.

Aspect (2) pertains to the vehicle interior system of Aspect (1), wherein the deceleration of the impacter is not greater than 80 g for any 3 ms interval over a time of impact.

Aspect (3) pertains to the vehicle interior system of any one of the preceding Aspects (1) or (2), wherein the display is a touch panel display, and the display module comprising a touch panel.

Aspect (4) pertains to the vehicle interior system of any one of the preceding Aspects (1)-(3), wherein a maximum thickness of the glass substrate measured between the first and second major surfaces is less than or equal to 1.5 mm.

Aspect (5) pertains to the vehicle interior system of any one of the preceding Aspects (1)-(4), wherein the maximum thickness of the glass substrate measured between the first and second major surfaces is 0.3 mm to 0.7 mm.

Aspect (6) pertains to the vehicle interior system of any one of the preceding Aspects (1)-(5), wherein the glass substrate comprises chemically strengthened glass.

Aspect (7) pertains to the vehicle interior system of any one of the preceding Aspects (1)-(6), wherein at least one of an anti-glare coating, an anti-reflection coating, and an easy-to-clean coating is disposed on the first major surface of the glass substrate.

Aspect (8) pertains to the vehicle interior system of any one of the preceding Aspects (1)-(7), further comprising a display disposed on the curved surface, the display comprising a display module attached to the second major surface of the glass substrate.

Aspect (9) pertains to the vehicle interior system of any one of the preceding Aspects (1)-(8), wherein at least one edge region of the glass substrate is strengthened for improved edge impact performance.

Aspect (10) pertains to the vehicle interior system of Aspect (9), wherein the edge region comprises a ground edge.

Aspect (11) pertains to the vehicle interior system of Aspect (10), wherein the ground edge is achieved by a grinding tool with a grit size finer than #400 grit.

Aspect (12) pertains to the vehicle interior system of Aspect (11), wherein the ground edge is achieved by a grinding tool with a grit size finer than #600 grit.

Aspect (13) pertains to the vehicle interior system of Aspect (11) or (12), wherein the ground edge is achieved by further grinding with a grinding tool with a grit size finer than #1000 grit.

Aspect (14) pertains to the vehicle interior system of Aspect (11) or (12), wherein the ground edge is achieved by further grinding with a grinding tool with a grit size finer than #1500 grit.

Aspect (15) pertains to the vehicle interior system of any one of Aspects (10)-(14), wherein the ground edge is further strengthened by an ion-exchange.

Aspect (16) pertains to the vehicle interior system of Aspect (15), wherein a strengthened polymer layer is formed on the ground edge after the ion-exchange.

Aspect (17) pertains to the vehicle interior system of any one of Aspects (10)-(14), wherein the ground edge is further strengthened by an etching with a wet acid to remove edge damage, and is further strengthened by ion-exchange.

Aspect (18) pertains to the vehicle interior system of Aspect (17), wherein the edge further comprises a strengthened polymer layer.

Aspect (19) pertains to the vehicle interior system of any one of Aspects (10)-(14), wherein the ground edge is further strengthen by an etching with a dry etching process, and further strengthen by ion-exchange.

Aspect (20) pertains to the vehicle interior system of Aspect (19), wherein the edge further comprises a strengthened polymer layer.

Aspect (21) pertains to the vehicle interior system of any of the preceding Aspects (1)-(20), further comprising an adhesive bonding the glass substrate to the base.

Aspect (22) pertains to the vehicle interior system of Aspect (21), wherein the adhesive has a Young's modulus greater than or equal to 300 MPa.

Aspect (23) pertains to the vehicle interior system of Aspect (22), wherein the adhesive has a Young's modulus greater than or equal to 800 MPa.

Aspect (24) pertains to the vehicle interior system of any one of the preceding Aspects (1)-(23), wherein the glass substrate does not break or fracture when the first major surface is impacted by the impacter.

Aspect (25) pertains to the vehicle interior system of any one of the preceding Aspects (1)-(24), wherein the first major surface has a compressive stress of greater than 700 MPa with a depth of layer (DOL) of about 40 $\mu$m.

Aspect (26) pertains to the vehicle interior system of any one of the preceding Aspects (1)-(25), wherein a low-friction coating is disposed on the first major surface of the glass substrate.

Aspect (27) pertains to the vehicle interior system of Aspect (6), wherein the first major surface and the second major surface of the glass substrate are substantially free of an anti-splinter film.

Aspect (28) of the present disclosure pertains to a method of making a vehicle interior system according to any one of the preceding Aspects (1)-(27), comprising curving the glass substrate at a temperature below the glass transition temperature of the glass substrate.

Aspect (29) pertains to the method of Aspect (28), further comprising curving the substrate with the glass substrate.

Aspect (30) of the present disclosure pertains to a method of making a vehicle interior system according to any one of Aspects (1)-(26), comprising curving the glass substrate at a temperature above the glass transition temperature of the glass substrate.

Aspect (31) of the present disclosure pertains to a vehicle interior system comprising: a base comprising a curved surface; a glass substrate comprising a first major surface, a second major surface, a minor surface connecting the first major surface and the second major surface, and a thickness in a range from 0.05 mm to 2 mm; and an adhesive layer between the base and the glass substrate, wherein the glass substrate is in a cold-formed state being conformed to the base at a temperature below the glass transition temperature of the glass substrate and the second major surface is attached to the base by the adhesive, the second major surface having a first radius of curvature corresponding to the curved surface of the base, and wherein, in the cold-formed state, the glass substrate has a stored internal tensile energy below a predetermined value for improved frangibility of the glass substrate.

Aspect (32) pertains to the vehicle interior system of Aspect (31), wherein the glass substrate has a thickness in a range from 0.4 mm to 1.1 mm.

Aspect (33) pertains to the vehicle interior system of Aspect (32), wherein the chemically strengthened glass substrate has a thickness in a range from 0.4 mm to 0.7 mm.

Aspect (34) pertains to the vehicle interior system of any one of Aspects (31)-(33), wherein the second major surface comprises a radius of curvature of 1000 mm or more.

Aspect (35) pertains to the vehicle interior system of any one of Aspects (31)-(33), wherein the second major surface comprises a radius of curvature of less than 1000 mm.

Aspect (36) pertains to the vehicle interior system of any one of Aspects (30)-(34), wherein the adhesive is an optically clear adhesive.

Aspect (37) pertains to the vehicle interior system of any one of Aspects (30)-(35), wherein the base comprises a display unit in at least one region of the base.

Aspect (38) pertains to the vehicle interior system of any one of Aspects (30)-(36), wherein the first major surface has a compressive stress and a depth of layer (DOL) so that the stored internal tensile energy is below the predetermined value.

Aspect (39) pertains to the vehicle interior system of Aspect (37), wherein the stored internal tensile energy is below the predetermined value at a region of the glass substrate comprising the first radius of curvature.

Aspect (40) pertains to the vehicle interior system of any one of Aspects (36)-(38), wherein, below the predetermined value of the stored internal tensile energy, the display remains readable by a viewer after the glass substrate is fractured.

Aspect (41) pertains to the vehicle interior system of any one of Aspects (31)-(40), wherein the glass substrate is chemically strengthened.

Aspect (42) pertains to the vehicle interior system of Aspect (41), wherein an anti-splinter film is not attached to the glass substrate.

Aspect (43) of the present disclosure pertains to a method of making a vehicle interior system comprising: providing a base comprising a surface having a first radius of curvature; chemically strengthening a glass substrate to achieve a desired ion-exchange profile based on a thickness of the glass substrate and a minimum desired radius of curvature of the glass substrate; and bending the glass substrate to conform to the surface of the base, where the bending is performed at temperature below the glass transition temperature of the glass substrate and the glass substrate has a radius of curvature above the minimum desired radius of curvature of the glass substrate, wherein the glass substrate, after bending, has a stored internal tensile energy profile below a predetermined amount of energy, the predetermined amount of energy being a function of the thickness of the glass substrate, a compressive stress of the glass substrate, a depth of layer of the glass substrate, and the minimum desired radius of curvature, and wherein below the predetermined amount of energy the glass substrate has improved frangibility.

Aspect (44) of the present disclosure pertains to a vehicle interior system comprising: a base comprising a curved surface; a mounting mechanism for mounting the base in a vehicle; a glass substrate comprising a first major surface, a second major surface, a minor surface connecting the first major surface and the second major surface, the second major surface being attached to the base and having a first radius of curvature, wherein, when an impacter having a mass of 6.8 kg impacts the first major surface at an impact velocity of 5.35 m/s to 6.69 m/s, the deceleration of the impacter is 120 g (g-force) or less.

Aspect (45) pertains to the vehicle interior system of Aspect (44), wherein the mounting mechanism comprises mounting brackets or clamps.

Aspect (46) pertains to the vehicle interior system of Aspect (44) or (45), wherein the base and the glass substrate in combination have a first stiffness K1.

Aspect (47) pertains to the vehicle interior system of any one of Aspects (44)-(46), wherein the mounting mechanism has a second stiffness K2 that limits intrusion of the vehicle interior system to a maximum desired intrusion level.

Aspect (48) pertains to the vehicle interior system of any one of Aspects (46) or (47), wherein the vehicle interior system has a system stiffness Ks defined as follows:

$$Ks = (K1 \times K2) / (K1 + K2).$$

Aspect (49) pertains to the vehicle interior system of Aspect (48), wherein the system stiffness Ks is in a range where the glass substrate does not fracture from the impact of the impacter.

Aspect (50) pertains to the vehicle interior system of Aspect (44), wherein the glass substrate has a thickness in a range from 0.05 mm to 2 mm.

Aspect (51) pertains to the vehicle interior system of any one of Aspects (44)-(50), wherein the second major surface comprises a first radius of curvature of 500 mm or greater,

Aspect (52) pertains to the vehicle interior system of any one of Aspects (44)-(51), wherein the deceleration of the impacter is not greater than 80 g for any 3 ms interval over a time of impact.

Aspect (53) pertains to the vehicle interior system of any one of Aspects (44)-(52), further comprising a display disposed on the curved surface, the display comprising a display module attached to the second major surface of the glass substrate.

Aspect (54) pertains to the vehicle interior system of Aspect (53), wherein the display is a touch panel display.

Aspect (55) pertains to the vehicle interior system of any one of Aspects (44)-(54), wherein a maximum thickness of the glass substrate measured between the first and second major surfaces is less than or equal to 1.5 mm.

Aspect (56) pertains to the vehicle interior system of any one of Aspects (44)-(55), wherein the maximum thickness of the glass substrate measured between the first and second major surfaces is 0.3 mm to 0.7 mm.

Aspect (57) pertains to the vehicle interior system of any one of Aspects (44)-(56), wherein the glass substrate comprises chemically strengthened glass.

Aspect (58) pertains to the vehicle interior system of Aspect (57), wherein the first major surface and the second major surface are substantially free of an anti-splinter film.

Aspect (59) pertains to the vehicle interior system of any one of Aspects (44)-(58), wherein at least one of an anti-glare coating, an anti-reflection coating, and an easy-to-clean coating is disposed on the first major surface of the glass substrate.

Aspect (60) pertains to the vehicle interior system of any one of Aspects (44)-(59), wherein the first major surface has a compressive stress of greater than 700 MPa with a DOL of about 40 $\mu$m.

Aspect (61) pertains to the vehicle interior system of any one of Aspects (44)-(60), wherein a low-friction coating is disposed on the first major surface of the glass substrate.

Aspect (62) pertains to the vehicle interior system of any one of Aspects (1)-(27), wherein, when an impacter having a mass of 6.8 kg impacts an edge of the glass substrate while the impacter is moving relative to the glass substrate at an angle of less than 90° with respect to the first major surface or the minor surface and at an impact velocity of 5.35 m/s to 6.69 m/s, the deceleration of the impacter is 120 g (g-force) or less.

Aspect (63) pertains to the vehicle interior system of Aspect (62), wherein the angle is about 45° with respect to the first major surface.

Aspect (64) pertains to the vehicle interior system of Aspect (62) or (63), wherein the deceleration of the impacter impacting the edge is not greater than 80 g for any 3 ms interval over a time of impact.

Aspect (65) pertains to the vehicle interior system of any one of Aspects (62)-(64), wherein the edge of the glass substrate comprises an intersection of the first major surface and the minor surface.

Aspect (66) pertains to the vehicle interior system of any one of Aspects (62)-(65), wherein the glass substrate does not break or fracture from the impacter impacting the edge at the angle.

Aspect (67) pertains to the vehicle interior system of any one of Aspects (62)-(66), further comprising an adhesive bonding the glass substrate to the base, wherein the adhesive is a structural adhesive or epoxy.

Aspect (68) pertains to the vehicle interior system of Aspect (67), wherein the adhesive has a relatively high Young's modulus.

Aspect (69) pertains to the vehicle interior system of Aspect (67) or (68), wherein the adhesive has a Young's modulus of greater than or equal to 300 MPa.

Aspect (70) pertains to the vehicle interior system of Aspect (69), wherein the Young's modulus is greater than or equal to 800 MPa.

Aspect (71) pertains to the vehicle interior system of any one of Aspects (62)-(70), wherein the edge of the glass substrate is exposed to a vehicle interior passenger environment.

Aspect (72) pertains to the vehicle interior system of any one of Aspects (62)-(71), wherein the minor surface of the glass substrate is exposed to the vehicle interior passenger environment.

Aspect (73) pertains to the vehicle interior system of any one of Aspects (62)-(72), wherein the deceleration of the impacter when impacting the edge at the angle is not greater than 80 g for any 3 ms interval over a time of impact.

Aspect (74) pertains to the vehicle interior system of Aspect (73), wherein the deceleration of the impacter when impacting the edge at the angle is not greater than 50 g for any 3 ms interval over a time of impact.

Aspect (75) pertains to the vehicle interior system of any one of Aspects (62)-(74), wherein a peak deceleration of the impacter when impacting the edge at the angle is not greater than 105 g over a time of impact.

Aspect (76) pertains to the vehicle interior system of Aspect (75), wherein a peak deceleration of the impacter when impacting the edge at the angle is not greater than 100 g over a time of impact.

Aspect (77) pertains to the vehicle interior system of Aspect (76), wherein a peak deceleration of the impacter when impacting the edge at the angle is not greater than 70 g over a time of impact.

Aspect (78) pertains to the vehicle interior system of any one of Aspects (64)-(77), wherein an intrusion of the vehicle interior system into a space behind the vehicle interior system when impacting the edge at the angle is not greater than 60 mm.

Aspect (79) pertains to the vehicle interior system of Aspect (78), wherein an intrusion of the vehicle interior system into a space behind the vehicle interior system when impacting the edge at the angle is not greater than 55 mm.

Aspect (80) pertains to the vehicle interior system of Aspect (79), wherein an intrusion of the vehicle interior system into a space behind the vehicle interior system when impacting the edge at the angle is not greater than 50 mm.

Aspect (81) pertains to the vehicle interior system of Aspect (70), wherein the Young's modulus is greater than or equal to 1 GPa.

Aspect (82) pertains to the vehicle interior system of Aspect (81), wherein the Young's modulus is greater than or equal to 1.5 GPa.

Aspect (83) pertains to the vehicle interior system of Aspect (82), wherein the Young's modulus is about 1.55 GPa.

Aspect (84) pertains to the vehicle interior system of any one of Aspects (1)-(27) and (62)-(83), wherein, when a 222 g mass having a diameter of 38.1 mm is dropped from a drop height onto an edge of the glass substrate while the mass is moving relative to the glass substrate at an angle of less than 90° with respect to the first major surface or the minor surface, the glass substrate does not break or fracture when the drop height is less than or equal to 15 cm.

Aspect (85) pertains to the vehicle interior system of Aspect (84), wherein the glass substrate does not break or fracture when the drop height is less than or equal to 25 cm.

Aspect (86) pertains to the vehicle interior system of Aspect (85), wherein the glass substrate does not break or fracture when the drop height is less than or equal to 35 cm.

Aspect (87) pertains to the vehicle interior system of Aspect (86), wherein the glass substrate does not break or fracture when the drop height is less than or equal to 45 cm.

It will be apparent to those skilled in the art that various modifications and variations can be made without departing from the spirit or scope of the invention.

**Claims**

1. A vehicle interior system comprising:

   a base comprising a curved surface;
   a glass substrate comprising a first major surface, a second major surface, a minor surface connecting the first major surface and the second major surface, and a thickness in a range from 0.05 mm to 2 mm, wherein the second major surface comprises a first radius of curvature of 500 mm or greater, and
   an adhesive bonding the glass substrate to the base, wherein the adhesive has a Young's modulus greater than or equal to 300 MPa;
   wherein, when an impacter having a mass of 6.8 kg impacts the first major surface at an impact velocity of 5.35 m/s to 6.69 m/s, the deceleration of the impacter is 120 g (g-force) or less.

2. The vehicle interior system of claim 1, wherein the deceleration of the impacter is not greater than 80 g for any 3 ms interval over a time of impact.

3. The vehicle interior system of claim 1, wherein the glass substrate comprises chemically strengthened glass.

4. The vehicle interior system of claim 1, further comprising a display disposed on the curved surface, the display comprising a display module attached to the second major surface of the glass substrate.

5. The vehicle interior system of claim 1, wherein the edge region comprises a ground edge achieved by a grinding tool with a grit size finer than #400 grit or #600 grit, and optional further grinding with a grinding tool with a grit size finer than #1000 grit or #1500 grit.

6. The vehicle interior system of claim 1, wherein the ground edge is further strengthened by an ion-exchange or is further strengthened by an etching with a wet acid to remove edge damage, and is further strengthened by ion-exchange.

7. The vehicle interior system of claim 6, wherein the first major surface and the second major surface of the glass substrate are substantially free of an anti-splinter film.

8. The vehicle interior system of claim 1, wherein:

   the glass substrate is in a cold-formed state being conformed to the base at a temperature below the glass transition temperature of the glass substrate and the second major surface is attached to the base by the adhesive, and
   in the cold-formed state, the glass substrate has a stored internal tensile energy below a predetermined value for improved frangibility of the glass substrate.

9. The vehicle interior system of claim 8, wherein the first major surface has a compressive stress and a depth of layer, DOL, so that the stored internal tensile energy is below the predetermined value.

10. The vehicle interior system of claim 8, wherein the stored internal tensile energy is below the predetermined value at a region of the glass substrate comprising the first radius of curvature.

11. The vehicle interior system of any one of claims 1-10, further comprising a mounting mechanism for mounting the base in a vehicle, wherein the mounting mechanism comprises mounting brackets or clamps.

12. The vehicle interior system of claim 11, wherein the base and the glass substrate in combination have a first stiffness K1, wherein the mounting mechanism has a second stiffness K2 that limits deflection of the base and glass substrate as a result of the impacter, wherein the vehicle interior system has a system stiffness Ks defined as follows:

$$Ks = (K1 \times K2) / (K1 + K2),$$

   and
   wherein the system stiffness Ks is in a range where the glass substrate does not fracture from the impact of the impacter.

13. The vehicle interior system of claim 12, wherein the system stiffness Ks is greater than 120 kN/m.

14. The vehicle interior system of claim 13, wherein the intrusion is less than 50.8 mm.

15. The vehicle interior system of any of claims 1-14, wherein the adhesive has a Young's modulus of up to 1.55 GPa.

# FIGURE 1

EP 4 056 429 A1

FIGURE 2

100

110

140

120

160

130

150

FIGURE 3

# FIGURE 4

150

152

156

154

t

W

EP 4 056 429 A1

FIGURE 5

400

410

EP 4 056 429 A1

# FIGURE 6

EP 4 056 429 A1

420

422

424

426

FIGURE 7A

FIGURE 7B

FIGURE 7C

428

430

428

432

428

434

FIGURE 8

436

EP 4 056 429 A1

# FIGURE 9

EP 4 056 429 A1

FIGURE 10

S11 — Glass sheet or anti-glare glass sheet

S12 — Cut glass to size

S13 — #400 grit edging

S14 — #1000 or finer (#1500 or #2000) grit edging

S15 — Wet acid etching

S16 — Ion exchanging

FIGURE 11

S21 — Glass sheet or anti-glare glass sheet

S22 — Cut glass to size

S23 — #400 grit edging

S24 — #1000 or finer (#1500 or #2000) grit edging

S25 — Plasma etching

S26 — Ion exchanging

# FIGURE 12

S31  S32  S33  S34  S35  S36  S37

| Glass sheet or anti-glare glass sheet | → | Cut glass to size | → | #400 grit edging | → | #1000 or finer (#1500 or #2000) grit edging | → | Wet acid etching | → | Ion exchanging | → | Edge coating |

EP 4 056 429 A1

# FIGURE 13

| Glass sheet or anti-glare glass sheet | → | Cut glass to size | → | #400 grit edging | → | #1000 or finer (#1500 or #2000) grit edging | → | Plasma etching | → | Ion exchanging | → | Edge coating |

S41  S42  S43  S44  S45  S46  S47

EP 4 056 429 A1

FIGURE 14

EP 4 056 429 A1

FIGURE 15

FIGURE 16

EP 4 056 429 A1

FIGURE 17

# Ball Drop Testing (Center vs Edge Impact with Different Edge Finish)

1.1 mm Gorilla Glass

Example 7 — 103.5

Example 8 — 12.9

Example 9 — 11.4

Example 10 — 11.9

Example 11 — 42.4

Y-axis: Drop Height (cm): 0, 40, 80, 120, 160

X-axis: Center(VHB), Edge(VHB)400, Edge(VHB)800, Edge(VHB)1500, Edge(Epoxy)400

222 g steel ball, 38.1 mm diameter
Glass is supported on rigid base

VHB is 0.3 mm 5909 3M VHB tape
Epoxy is 1.6 GPa Toughened Epoxy (Masterbond EP21TDCHT-LO)

## FIGURE 18

FIGURE 19

# FIGURE 20

440                442

# FIGURE 21

441

443

# FIGURE 22A

**Flat Assembly**

# FIGURE 22B

**Concave Assembly**

EP 4 056 429 A1

FIGURE 22C

Convex Assembly

FIGURE 22D

S-Bend Assembly

FIGURE 22E

S-Bend Assembly

FIGURE 23

IX Profile Stress Change vs. Depth due to Glass Curvature

FIGURE 24

FIGURE 25

FIGURE 26A

FIGURE 26B

FIGURE 26C

R500 mm

FIGURE 27A

FIGURE 27B

FIGURE 27C

R250 mm

FIGURE 28A

FIGURE 28B

FIGURE 28C

FIGURE 29

FIGURE 30A

FIGURE 30B

FIGURE 31A

FIGURE 31B

FIGURE 32A

# FIGURE 32B

FLAT  R1000mm  R800mm  R600mm  R500mm  R250mm

# FIGURE 33

| t (mm) | CS (MPa) | DOC (µm) | 1000000 | 1000 | 800 | 600 | 500 | 250 |
|---|---|---|---|---|---|---|---|---|
| 0.7 | 718.5 | 39.75 | | | | | 10.43 | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | |
| | 700 | 20 | | | | | | 10.5 |
| | 600 | 20 | | | | | | |
| | 500 | 20 | | | | | | |
| | 400 | 20 | | | | | | |
| | 300 | 20 | | | | | | |
| | 200 | 20 | | | | | | |
| | 800 | 30 | | | | | | |
| | 700 | 30 | | | | | | |
| | 600 | 30 | | | | | | |
| | 500 | 30 | | | | | | 10.4 |
| | 400 | 30 | | | | | | |
| | 300 | 30 | | | | | | |
| | 200 | 30 | | | | | | |
| | 800 | 40 | 10 | | | | | |
| | 700 | 40 | | | | | 10.1 | |
| | 600 | 40 | | | | | | |
| | 500 | 40 | | | | | | |
| | 400 | 40 | | | | | | 10.3 |
| | 300 | 40 | | | | | | |
| | 200 | 40 | | | | | | |
| | 800 | 50 | | | | | | |
| | 700 | 50 | | | | | | |
| | 600 | 50 | | | | 10.3 | | |
| | 500 | 50 | | | | | | |
| | 400 | 50 | | | | | | |
| | 300 | 50 | | | | | | |
| | 200 | 50 | | | | | | |
| | 800 | 60 | | | | | | |
| | 700 | 60 | | | | | | |
| | 600 | 60 | | | | | | |
| | 500 | 60 | | | | 10.1 | | |
| | 400 | 60 | | | | | | |
| | 300 | 60 | | | | | | 10.3 |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | | | | | | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | | 10 | 10.3 | | | |
| | 300 | 80 | | | | | | |
| | 200 | 80 | | | | | | |

# FIGURE 34

| t (mm) | CS (MPa) | DOC (µm) | Stored Tensile Energy (J/m^2) | | | | | |
|---|---|---|---|---|---|---|---|---|
| | | | 1000000 | 1000 | 800 | 600 | 500 | 250 |
| 0.55 | 707 | 38.5 | 11.6 | 12 | 12.2 | 12.6 | 13 | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | |
| | 700 | 20 | | | | | | |
| | 600 | 20 | | | | | | |
| | 500 | 20 | | | | | | |
| | 400 | 20 | | | | | | |
| | 300 | 20 | | | | | | |
| | 200 | 20 | | | | | | |
| | 800 | 30 | | | | | 10.7 | |
| | 700 | 30 | | | | | 8.5 | 12.7 |
| | 600 | 30 | | | | | | 10.7 |
| | 500 | 30 | | | | | | |
| | 400 | 30 | | | | | | |
| | 300 | 30 | | | | | | |
| | 200 | 30 | | | | | | |
| | 800 | 40 | | | | | | |
| | 700 | 40 | 12.3 | 12.6 | 12.8 | | | |
| | 600 | 40 | 9 | | | | 10.4 | |
| | 500 | 40 | 6.3 | | | | | |
| | 400 | 40 | 4 | | | | | |
| | 300 | 40 | | | | | | |
| | 200 | 40 | | | | | | |
| | 800 | 50 | | | | | | |
| | 700 | 50 | | | | | | |
| | 600 | 50 | | | | | | |
| | 500 | 50 | 9.6 | | | | 10.3 | |
| | 400 | 50 | 6.7 | | | | | |
| | 300 | 50 | | | | | | |
| | 200 | 50 | | | | | | |
| | 800 | 60 | | | | | | |
| | 700 | 60 | | | | | | |
| | 600 | 60 | | | | | | |
| | 500 | 60 | | | | | | |
| | 400 | 60 | 3.75 | | | | 9.9 | |
| | 300 | 60 | | | | | | |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | 11.7 | 12 | 12.2 | 12.5 | 12.8 | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | | | | | | |
| | 300 | 80 | | | | | 8.5 | 12.5 |
| | 200 | 80 | | | | | | |

# FIGURE 35

| t (mm) | CS (MPa) | DOC (µm) | Stored Tensile Energy (J/m^2) | | | | | |
| | | | 1000000 | 1000 | 800 | 600 | 500 | 250 |
|---|---|---|---|---|---|---|---|---|
| 0.4 | 685 | 38.25 | | | | | 20.6 | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | |
| | 700 | 20 | | | | | | |
| | 600 | 20 | | | | | | |
| | 500 | 20 | | | | | | |
| | 400 | 20 | | | | | | |
| | 300 | 20 | | | | | | |
| | 200 | 20 | | | | | | |
| | 800 | 30 | | | | | | |
| | 700 | 30 | | | | | | |
| | 600 | 30 | | | | | | |
| | 500 | 30 | | | | | | |
| | 400 | 30 | | | | | | |
| | 300 | 30 | | | | | | |
| | 200 | 30 | | | | | | |
| | 800 | 40 | | | | | | |
| | 700 | 40 | | | | | | |
| | 600 | 40 | | | | | | |
| | 500 | 40 | | | | | | |
| | 400 | 40 | | | | | | |
| | 300 | 40 | | | | | | |
| | 200 | 40 | | | | | | |
| | 800 | 50 | | | | | | |
| | 700 | 50 | | | | | | |
| | 600 | 50 | | | | | | |
| | 500 | 50 | | | | | | |
| | 400 | 50 | | | | | | |
| | 300 | 50 | | | | | | |
| | 200 | 50 | | | | | | |
| | 800 | 60 | | | | | | |
| | 700 | 60 | | | | | | |
| | 600 | 60 | | | | | | |
| | 500 | 60 | | | | | | |
| | 400 | 60 | | | | | | |
| | 300 | 60 | | | | | | |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | | | | | | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | | | | | | |
| | 300 | 80 | | | | | | |
| | 200 | 80 | | | | | | |

# FIGURE 36

| t (mm) | CS (MPa) | DOC (µm) | Squared Stress Integral (MPa^2·m) | | | | | |
|---|---|---|---|---|---|---|---|---|
| | | | 1000000 | 1000 | 800 | 600 | 500 | 250 |
| 0.7 | 718.5 | 39.75 | | | | 0.68 | | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | |
| | 700 | 20 | | | | | | |
| | 600 | 20 | | | | | | 0.68 |
| | 500 | 20 | | | | | | |
| | 400 | 20 | | | | | | |
| | 300 | 20 | | | | | | |
| | 200 | 20 | | | | | | |
| | 800 | 30 | | | | | | |
| | 700 | 30 | | | | | | |
| | 600 | 30 | | | | | | |
| | 500 | 30 | | | | | | |
| | 400 | 30 | | | | | | |
| | 300 | 30 | | | | | | |
| | 200 | 30 | | | | | | |
| | 800 | 40 | 0.7 | | | | | |
| | 700 | 40 | | | | | | |
| | 600 | 40 | | | | | | |
| | 500 | 40 | | | | | | |
| | 400 | 40 | | | | | | |
| | 300 | 40 | | | | | | |
| | 200 | 40 | | | | | | |
| | 800 | 50 | | | | | | |
| | 700 | 50 | | | | | | |
| | 600 | 50 | | | 0.67 | | | |
| | 500 | 50 | | | | | | |
| | 400 | 50 | | | | | | |
| | 300 | 50 | | | | | | 0.67 |
| | 200 | 50 | | | | | | |
| | 800 | 60 | | | | | | |
| | 700 | 60 | | | | | | |
| | 600 | 60 | | | | | | |
| | 500 | 60 | | | | | | |
| | 400 | 60 | | | | | | |
| | 300 | 60 | | | | | | |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | | | | | | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | 0.67 | 0.7 | | | | |
| | 300 | 80 | | | | | | |
| | 200 | 80 | | | | | | |

# FIGURE 37

| t (mm) | CS (MPa) | DOC (µm) | Squared Stress Integral (MPa^2-m) | | | | | |
|---|---|---|---|---|---|---|---|---|
| | | | 1000000 | 1000 | 800 | 600 | 500 | 250 |
| 0.55 | 707 | 38.5 | | | 0.67 | 0.69 | | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | |
| | 700 | 20 | | | | | | |
| | 600 | 20 | | | | | | |
| | 500 | 20 | | | | | | |
| | 400 | 20 | | | | | | |
| | 300 | 20 | | | | | | |
| | 200 | 20 | | | | | | |
| | 800 | 30 | | | | | | |
| | 700 | 30 | | | | | | 0.7 |
| | 600 | 30 | | | | | | |
| | 500 | 30 | | | | | | |
| | 400 | 30 | | | | | | |
| | 300 | 30 | | | | | | |
| | 200 | 30 | | | | | | |
| | 800 | 40 | | | | | | |
| | 700 | 40 | 0.67 | 0.69 | 0.7 | | | |
| | 600 | 40 | | | | | | |
| | 500 | 40 | | | | | | |
| | 400 | 40 | | | | | | |
| | 300 | 40 | | | | | | |
| | 200 | 40 | | | | | | |
| | 800 | 50 | | | | | | |
| | 700 | 50 | | | | | | |
| | 600 | 50 | | | | | | |
| | 500 | 50 | | | | | | |
| | 400 | 50 | | | | | | |
| | 300 | 50 | | | | | | |
| | 200 | 50 | | | | | | |
| | 800 | 60 | | | | | | |
| | 700 | 60 | | | | | | |
| | 600 | 60 | | | | | | |
| | 500 | 60 | | | | | | |
| | 400 | 60 | | | | | | |
| | 300 | 60 | | | | | | |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | | | 0.67 | 0.69 | | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | | | | | | |
| | 300 | 80 | | | | | | 0.69 |
| | 200 | 80 | | | | | | |

# FIGURE 38

| t (mm) | CS (MPa) | DOC (µm) | Squared Stress Integral (MPa^2·m) | | | | | |
|---|---|---|---|---|---|---|---|---|
| | | | 1000000 | 1000 | 800 | 600 | 500 | 250 |
| 0.4 | 685 | 38.25 | | | | 0.82 | 0.82 | |
| | 800 | 10 | | | | | | |
| | 700 | 10 | | | | | | |
| | 600 | 10 | | | | | | |
| | 500 | 10 | | | | | | |
| | 400 | 10 | | | | | | |
| | 300 | 10 | | | | | | |
| | 200 | 10 | | | | | | |
| | 800 | 20 | | | | | | 0.44 |
| | 700 | 20 | | | | | | |
| | 600 | 20 | | | | | | |
| | 500 | 20 | | | | | | |
| | 400 | 20 | | | | | | |
| | 300 | 20 | | | | | | |
| | 200 | 20 | | | | | | |
| | 800 | 30 | | | | | | |
| | 700 | 30 | | | | | | |
| | 600 | 30 | | | | | | |
| | 500 | 30 | | | | | | |
| | 400 | 30 | | | | | | |
| | 300 | 30 | | | | | | |
| | 200 | 30 | | | | | | |
| | 800 | 40 | | | | | | |
| | 700 | 40 | | | | | | |
| | 600 | 40 | 0.67 | 0.67 | 0.68 | 0.68 | 0.68 | 0.77 |
| | 500 | 40 | 0.46 | | | | | 0.57 |
| | 400 | 40 | 0.3 | | | | | |
| | 300 | 40 | | | | | | 0.37 |
| | 200 | 40 | | | | | | |
| | 800 | 50 | | | | | | |
| | 700 | 50 | | | | | | |
| | 600 | 50 | | | | | | |
| | 500 | 50 | 0.71 | 0.71 | 0.72 | 0.73 | 0.73 | |
| | 400 | 50 | | | | | | |
| | 300 | 50 | | | | | | |
| | 200 | 50 | | | | | | |
| | 800 | 60 | | | | | | |
| | 700 | 60 | | | | | | |
| | 600 | 60 | | | | | | |
| | 500 | 60 | | | | | | |
| | 400 | 60 | 0.64 | | | | | 0.72 |
| | 300 | 60 | | | | | | |
| | 200 | 60 | | | | | | |
| | 800 | 70 | | | | | | |
| | 700 | 70 | | | | | | |
| | 600 | 70 | | | | | | |
| | 500 | 70 | | | | | | |
| | 400 | 70 | 0.85 | | | | | |
| | 300 | 70 | | | | | | |
| | 200 | 70 | | | | | | |
| | 800 | 80 | | | | | | |
| | 700 | 80 | | | | | | |
| | 600 | 80 | | | | | | |
| | 500 | 80 | | | | | | |
| | 400 | 80 | | | | | | |
| | 300 | 80 | | | | | | |
| | 200 | 80 | | | | | | |

# FIGURE 39

EP 4 056 429 A1

# FIGURE 40

Head Form

M

K1 (Glass + Display)

K2 (Clamps or Springs)

m

Ks (System)

FIGURE 41

① Lowest Ks (limited by Intrusion 2");

② Highest Ks (limited by glass breakage);

③ Max Acceleration < 120 g;

# FIGURE 42

3-ms deceleration (g): 63.3
Max deceleration (g): 66.6
Max intrusion (mm): 52.4

FIGURE 43

K1 vs. K2 - HIT

FIGURE 44

K1 vs. K2 - HIT

FIGURE 45

FIGURE 46

Auto Interior Display Module

Test Mounting Bracket (K2) by limiting module deflection. Put K2 in target region (Figure 6)

Calculate Module Stiffness (K1) from Figure 6

Test Module Stiffness (K1) by limiting Mounting Bracket deflection. Adjust Mounting Bracket Stiffness (K1) in target region (Figure 6)

Confirmation Run

# FIGURE 47A

(A) SLG-IOXed (90 Grit SiC, 2 psi – 5 sec)

EP 4 056 429 A1

FIGURE 47B

(B) Gorilla Glass (90 Grit SiC, 2 psi – 5 sec)

EP 4 056 429 A1

# FIGURE 47C

EP 4 056 429 A1

(C) SLG-IOXed (90 Grit SiC, 5 psi – 5 sec)

# FIGURE 47D

(D) Gorilla Glass (90 Grit SiC, 5 psi – 5 sec)

Europäisches
Patentamt

European
Patent Office

Office européen
des brevets

# EUROPEAN SEARCH REPORT

Application Number

EP 22 17 0461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 156 286 A1 (AGC GLASS EUROPE [BE]) 19 April 2017 (2017-04-19) * paragraph [0003] – paragraph [0005] * * paragraph [0012] – paragraph [0044] * * paragraph [0064] – paragraph [0076]; claims 1, 3, 5 * | 1-15 | INV. B60R13/02 B32B17/10 |
| A | EP 3 118 174 A1 (AGC GLASS EUROPE [BE]) 18 January 2017 (2017-01-18) * paragraph [0038] – paragraph [0059] * | 1-15 | |
| A | EP 3 118 175 A1 (AGC GLASS EUROPE [BE]) 18 January 2017 (2017-01-18) * paragraph [0035] – paragraph [0049]; claim 1 * | 1-15 | |

TECHNICAL FIELDS
SEARCHED      (IPC)

B60R
B32B

The present search report has been drawn up for all claims

| Place of search | Date of completion of the search | Examiner |
|---|---|---|
| Berlin | 6 July 2022 | Ekblom, Henrik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 0461

This annex lists the patent family members relating to the patent documents cited in  the above-mentioned European search report.
The members are as contained in the European Patent Office EDP file on
The European Patent Office is in no way liable for these particulars which are merely given for the purpose of information.

06-07-2022

| Patent document cited in search report | | Publication date | Patent family member(s) | | Publication date |
|---|---|---|---|---|---|
| EP 3156286 | A1 | 19-04-2017 | EP | 3156286 A1 | 19-04-2017 |
|  |  |  | EP | 3362316 A1 | 22-08-2018 |
|  |  |  | JP | 2019501052 A | 17-01-2019 |
|  |  |  | US | 2018304825 A1 | 25-10-2018 |
|  |  |  | WO | 2017064187 A1 | 20-04-2017 |
| EP 3118174 | A1 | 18-01-2017 | CN | 108025951 A | 11-05-2018 |
|  |  |  | EA | 201890174 A1 | 29-06-2018 |
|  |  |  | EP | 3118174 A1 | 18-01-2017 |
|  |  |  | EP | 3325418 A1 | 30-05-2018 |
|  |  |  | JP | 6948310 B2 | 13-10-2021 |
|  |  |  | JP | 2018528116 A | 27-09-2018 |
|  |  |  | US | 2018208131 A1 | 26-07-2018 |
|  |  |  | WO | 2017012913 A1 | 26-01-2017 |
| EP 3118175 | A1 | 18-01-2017 | CN | 108025950 A | 11-05-2018 |
|  |  |  | EA | 201890241 A1 | 30-04-2018 |
|  |  |  | EP | 3118175 A1 | 18-01-2017 |
|  |  |  | EP | 3325417 A1 | 30-05-2018 |
|  |  |  | JP | 2018528912 A | 04-10-2018 |
|  |  |  | US | 2018208494 A1 | 26-07-2018 |
|  |  |  | WO | 2017012912 A1 | 26-01-2017 |

EPO FORM P0459

For more details about this annex : see Official Journal of the European Patent Office, No. 12/82

**REFERENCES CITED IN THE DESCRIPTION**

**Patent documents cited in the description**

- US 62558341
- US 62593553
- US 62672123